Europäisches Patentamt

European Patent Office

Office européen des brevets

(19)

(11) **EP 0 660 960 B1**

(12) **EUROPÄISCHE PATENTSCHRIFT**

(45) Veröffentlichungstag und Bekanntmachung des Hinweises auf die Patenterteilung:
06.08.1997 Patentblatt 1997/32

(51) Int Cl.6: **G07C 5/08**, G07B 13/02, G01S 5/14, G01P 21/00

(21) Anmeldenummer: 93919287.8

(22) Anmeldetag: 07.09.1993

(86) Internationale Anmeldenummer:
PCT/EP93/02415

(87) Internationale Veröffentlichungsnummer:
WO 94/06100 (17.03.1994 Gazette 1994/07)

(54) **VERFAHREN UND VORRICHTUNG ZUM BESTIMMEN, REGISTRIEREN UND FALLWEISEN AUSWERTEN VON BETRIEBS- UND/ODER FAHRDATEN EINES FAHRZEUGES**

PROCESS AND DEVICE FOR DETECTING, RECORDING AND SELECTIVELY EVALUATING OPERATIONAL AND/OR DRIVING DATA OF A VEHICLE

PROCEDE ET DISPOSITIF POUR DETERMINER, ENREGISTRER ET SELECTIVEMENT EVALUER LES DONNEES DE FONCTIONNEMENT ET/OU DE CIRCULATION D'UN VEHICULE

(84) Benannte Vertragsstaaten:
AT BE CH DE DK ES FR GB GR IE IT LI LU NL PT SE

(30) Priorität: 07.09.1992 CH 2808/92

(43) Veröffentlichungstag der Anmeldung:
05.07.1995 Patentblatt 1995/27

(73) Patentinhaber: Wagner, Jean-Jacques
9492 Eschen (LI)

(72) Erfinder: Wagner, Jean-Jacques
9492 Eschen (LI)

(74) Vertreter: Riederer, Conrad A., Dr. et al
Bahnhofstrasse 10
7310 Bad Ragaz (CH)

(56) Entgegenhaltungen:
EP-A- 0 451 482          EP-A- 0 553 478
WO-A-80/02207           WO-A-84/03359
FR-A- 2 566 349         FR-A- 2 647 930
US-A- 4 662 209         US-A- 5 129 605

• PATENT ABSTRACTS OF JAPAN vol. 11, no. 66 (P-552) (2513) 27. Februar 1987 & JP,A,61 230 068 (TOSHIBA) 14. Oktober 1986
• PATENT ABSTRACTS OF JAPAN vol. 14, no. 325 (P-1075) 12. Juli 1990 & JP,A,02 107 985 (MATSUSHITA) 19. April 1990

**Beschreibung**

Die Erfindung betrifft ein Verfahren und eine Vorrichtung zum Bestimmen, Registrieren und fallweisen Auswerten von Betriebs- und/oder Fahrdaten eines Fahrzeuges nach dem Oberbegriff des Anspruchs 1 bzw. des Anspruchs 12, sowie eine Verwendung dieses Verfahrens bzw. dieser Vorrichtung.

Im Fahrzeugbereich werden Datenerfassungs- bzw. -registriersysteme eingesetzt, die beispielsweise die Fahrweise, den Einsatz des Fahrzeuges und/oder die für die Ausführung von fahrzeugbezogenen Aufgaben gesammelten Daten registrieren bzw. verwalten. Diese Geräte umfassen gegebenenfalls Mikroprozessor-Schaltungen, über die die Auswertung der Signale von verschiedenen und unterschiedlichen Sensoren erfolgt. So werden zur Bestimmung der gefahrenen Strecke weg-abhängige Signale verwertet, die beispielsweise von einem Tachometer, einem am Rad angeschlossenen Impulsgeber, einem im Fahrzeug eingebauten Bordcomputer oder anderen elektronischen Vorrichtungen geliefert werden. Damit wird, in Abhängigkeit von vorgegebenen Aufgabenstellungen, die Registrierung von zurückgelegten Strecken, von Angaben über den Einsatz eines Fuhrparks, von gefahrenen Geschwindigkeiten, von Angaben über die zuletzt gefahrene Strecke und von anderen Informationen möglich.

Die in ökologischer Hinsicht problematische Erhöhung des Verkehrsaufkommens macht Lösungsansätze einsichtig, die auf einer kilometerabhängigen Besteuerung des Strassenverkehrs beruhen. Auch für die Bestimmung bzw. die Berechnung von Fahrstrecken-abhängigen Remunerationen oder für die Bestimmung von Entgelt für bestimmte Dienstleistungen, wie beispielsweise Fahrzeug-Leasing, werden ähnliche Ansätze verfolgt. Die solchen Bewertungen zugrunde zu legenden Betriebsdaten werden vorzugsweise gefahrene Kilometer sein, aber auch die gefahrenen Geschwindigkeiten, die Fahrweise, die geographische Lage, die Fahrzeit, die Tages- und/oder Kalenderzeit, die vorgesehene Nutzung und/oder andere relevante Kriterien können zugrunde gelegt werden.

Solche Bewertungsarten implizieren Datenerfassungskonzepte, die flächendeckend für eine grosse Anzahl auch unterschiedlichster Fahrzeugtypen in unterschiedlichen Ländern einwandfrei eingesetzt werden können. Um wirtschaftlich sinnvoll zu sein, sollte die gesamte Verwaltung und Überwachung der erfassten bzw. gespeicherten Daten EDV-mässig erfolgen. Eine wesentliche Voraussetzung für das klaglose Funktionieren eines solchen Konzeptes ist einerseits Manipulations- und Fälschungssicherheit und vorzugsweise andererseits die Überprüfbarkeit der Korrektheit und Funktionstüchtigkeit der Datenerfassung- bzw. -registriereinrichtung durch den Verkehrsteilnehmer selbst.

Datenerfassungsgeräte für den Strassenverkehr (US 4,188,618, US 4,072,850, DE 32 21 399 und FR-A-2 535 491) wie auch elektronische Wegmesssysteme oder Taxameter (DE 3419773) sind bekannt. Es sind auch Verfahren für die Eichung von Wegmessgeräten bekannt, die durch das Fahren (WO 90/15337, CH 657 916, DE 30 44 503, EP 2.657.962) einer vorgegebenen Streckenlänge gekennzeichnet sind. Die Gattung der Radumdrehungszähler (CH 681 931, EP 0 195 737) ist für die fälschungssichere Erfassung von Wegdaten bekannt. Auch gibt es Systeme für die fälschungssichere Übertragung von Wegdaten zwischen Geber und Erfassungsgerät (US 5 155 747).

Die Vorrichtung gemäss EP-A-0 553 478 überprüft die Anwesenheit des Tachosignals, gibt aber keine Auskunft über die Gültigkeit dieses Signals und kann eine Manipulation des Tachogeräts, zum Beispiel Herabsetzung der Impulsrate pro Meter, nicht detektieren.

WO-A-84/03359 beschreibt einen Unfalldatenschreiber, welcher Fahrdaten im Fall eines Unfalls von der jeweils zuletzt gefahrenen Fahrstrecke in einem Speicher verfügbar hält, um eine Auswertung der Daten des kritischen Zeitraums vor und nach dem Unfall zu ermöglichen.

Die weiteren Dokumente US-A-5 129 605, JP-A-61/230068 und JP-A- 2/107985 stellen zum Zweck sofortiger Korrektur der Streckendaten Systeme dar, die Positionsdaten sowohl über GPS-Systeme als auch über Tachometerimpulse gewinnen und miteinander abgleichen, ohne dass eine Langzeitspeicherung oder eine statistische Auswertung der verglichenen Daten erfolgt.

Mittels solcher, an sich bekannter, Verfahren und Vorrichtungen können die oben beschriebenen Aufgaben nicht gelöst werden. Klassische Methoden für Systemabsicherung, wie beispielsweise mechanische Plombierungen, und für Systemeichung sind aufgrund des unumgänglichen administrativen Aufwands für diese Aufgabe nicht geeignet.

Durch die Verwirklichung der kennzeichnenden Merkmale des Anspruchs 1 bzw. des Anspruchs 12 wird ein Verfahren bzw. eine Vorrichtung bereitgestellt, die eine Lösung der oben beschriebenen Problemstellung darstellen. Eine bevorzugte Verwendung dieses Verfahrens bzw. dieser Vorrichtung ist in Anspruch 29 beschrieben.

Vorteilhafte Weiterbildungen sind durch die kennzeichnenden Merkmale der abhängigen Ansprüche beschrieben.

Dadurch, dass einer bestimmte betriebs- bzw. fahrzeugspezifische Daten ermittelnden, ersten Ermittlungseinheit wenigstens eine zweite Ermittlungseinheit zugeordnet ist, die den mittels der ersten Ermittlungseinheit ermittelten Daten vergleichbare Daten in einer von der ersten Ermittlungseinheit unabhängigen und insbesondere unterschiedlichen Weise ermittelt, und dass diese über die beiden Ermittlungseinheiten ermittelten Daten in einem Speicher - gegebenenfalls zeitbezogen - abgelegt und somit für eine weitere Auswertung verfügbar werden, wird es möglich, ein Datenerfassungskonzept zu verwirklichen, das manipulations- und fälschungssicher ist, und gleichzeitig die Korrektheit der Datenerfassung bzw. -registrierung selbst gewährleistet, gegebenenfalls überprüft und dessen Funktionstüchtigkeit verbessert.

Eine solche, einfache und autonome Vorrichtung kann einer bereits in einem Fahrzeug (PKW, LKW, Anhänger, Motorrad, Fahrrad u.dgl.) vorgesehenen Sensoreinheit beliebiger Art zugeordnet werden. Wird eine fahrstreckenabhängige Auswertung gewünscht, so wird insbesondere die fahrzeugspezifische Wegimpuls-Sensoreinheit als an die erste Ermittlungseinheit Daten liefernde Sensoreinheit vorgesehen werden. Die der zweiten Ermittlungseinheit zugeordnete Sensoreinheit kann dann eine Beschleunigungssensoreinheit und/oder ein die Dynamik des Fahrzeugs bestimmendes GPS-System (Global Positioning System) sein.

Die über die beiden Ermittlungseinheiten zur Verfügung gestellten Daten können einerseits zur Berechnung von Umrechnungsparametern zwischen den einzelnen Impuls-liefernden Sensoreinheiten bzw. den zugehörigen Auswerteschaltungen bzw. -einheiten und damit deren Eichung oder andererseits bzw. gleichzeitig zur Kontrolle bzw. Registrierung von Manipulationsversuchen oder Störfällen verwendet werden. Dazu werden diese Daten vorzugsweise in einem Vergleicher verglichen und/oder - insbesondere zeitbezogen - in einem Speicher abgelegt und einer entsprechenden Auswertung, die - gegebenenfalls unabhängig vom Fahrzeug - vorzugsweise EDV-programmunterstützt vorgenommen wird.

Verschiedene, gegebenenfalls miteinander kombinierbare, an sich alternative Vorkehrungen, die sowohl der Manipulationsals auch der Identifikationssicherheit dienen können, sind durch Vorrichtungen, wie in einem der Ansprüche 13, 14, 18 und 20 bis 25 beschrieben, verwirklichbar. Die Störungsanfälligkeit des Systems wird verringert bzw. werden Störungen registrierbar, wenn Vorrichtungen, wie in einem der Ansprüche 14, 18, 19 beschrieben, vorgesehen sind. Vorrichtungen, die verbesserte Impulsdetektion bzw.-verarbeitung ermöglichen sind in den Ansprüchen 14, 17, 19 beschrieben.

Es versteht sich, dass die Kombination von solchen, bestimmte Aufgaben erfüllenden Vorrichtungen im Hinblick auf bestimmte Aufgabenstellungen einen synergistischen Effekt zeitigen kann.

Das erfindungsgemässe Verfahren bzw. die erfindungsgemässe Vorrichtung - ohne den aus dem Stand der Technik bekannten, unumgänglichen administrativen Aufwand - ermöglicht eine elektronisch durchführbare Systemabsicherung bzw. auch -Eichung.

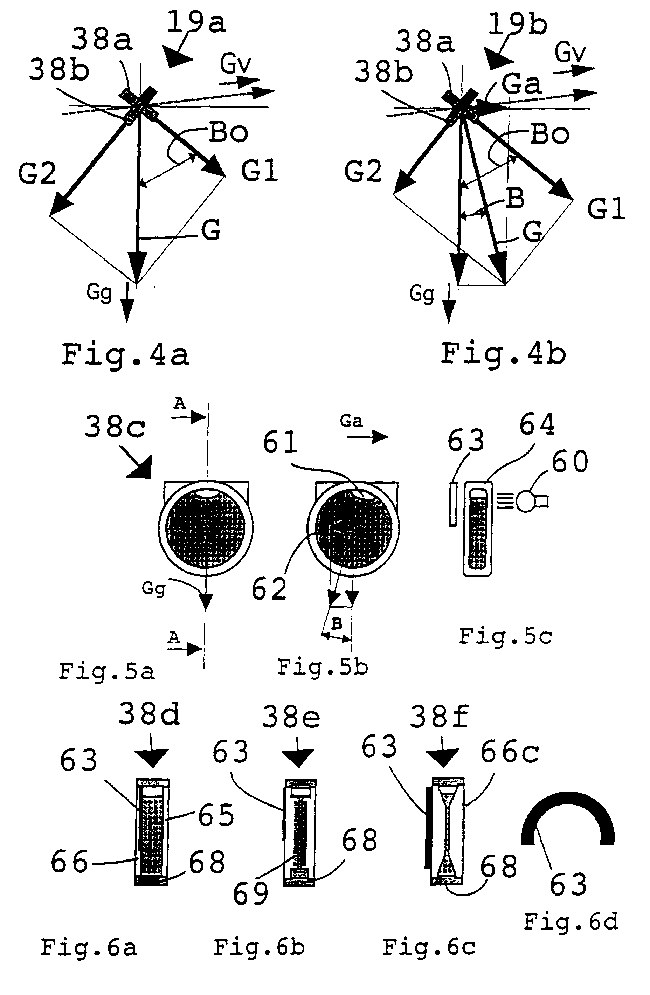

Die in Anspruch 16 beschriebene Beschleunigungssensoreinheit für die Bestimmung der Fahrtrichtung liegenden HorizontalBeschleunigung ermöglicht gleichzeitg, Montageprobleme zu minimieren und Manipulationsversuche unwirksam zu machen bzw. zu registrieren. Ein für eine solche Beschleunigungseinheit geeigneter Sensor, ein Neigungssensor einfacher und kostengünstiger Bauart, ist in den Figuren 5 und 6 dargestellt.

Die Erfindung wird im folgenden anhand von Figuren beispielhaft beschrieben. Es zeigen:

| | |
|---|---|
| Fig.1 | eine Datenschalteinheit; |
| Fig.2 | eine Darstellung eines Datenerfassungskonzepts; |
| Fig.3a, 3b, 3c | Blockschaltbilder für alternative Datenvergleichssysteme; |
| Fig.4 | eine Darstellung der Bestimmung von Horizontalbeschleunigungen mittels zweier Beschleunigungssensoren; |
| Fig.5a bis 5c | Darstellung der Bestimmung der Horizontalbeschleunigung mittels eines Neigungssensors; |
| Fig.6a bis 6d | alternative Ausführungsformen von Neigungssensoren; |
| Fig.7 | eine Ermittlungseinheit mit zwei Beschleunigungssensoreinheiten; |
| Fig.8 | eine Darstellung des Berechnungsverfahrens zur Bestimmung der Horizontalbeschleunigung; |
| Fig.9a und 9b | Darstellungen der Verwaltung der Daten; |
| Fig.10 | eine Darstellung einer möglichen Anordnung der Datenschalteinheit in einem Fahrzeug; |
| Fig.11a und 11b | Darstellung der Funktionsweise einer systembezogenen Manipulationskontrolle; |
| Fig.12 bis 18 zu Fig.11 | alternative Ausführungsbeispiele; |
| Fig.19 und 20 | Darstellungen von Zugangsregistrieranordnungen; |
| Fig.21 | Fahrzeug-unabhängige Signalgeber und |
| Fig.22a und 22b | Darstellungen von alternativen Anordnungsmöglichkeiten von Beschleunigungssensoren. |

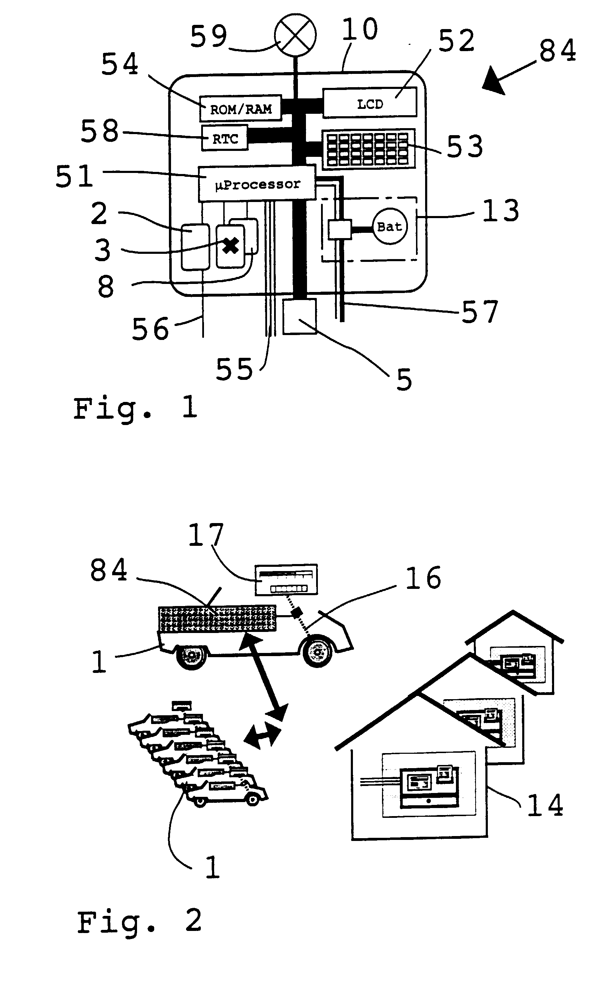

Fig.1 zeigt in schematischer Darstellung eine Datenschalteinheit 84, die folgende Elemente umfasst: eine erste Ermittlungseinheit 2, eine zweite Ermittlungseinheit 3, Sensoren 8, eine Datenschnittstelle 5, ein - insbesondere gegen Manipulation geschütztes - Gehäuse 10, eine Batterieeinheit 13, einen Mikroprozessor 51, eine Anzeigevorrichtung 52 in Form eines Displays, einen Signalgeber 59, der extern oder intern angeordnet sein kann, eine Eingabevorrichtung 53 in Form einer Tastatur zur Eingabe von Fahrzeug- oder Benutzerspezifischen Daten oder auch zur Anwahl einer bestimmten Anzeige oder Anzeigeart, einen Speicher 54, diverse Signaleingänge 55 und 56, eine Stromversorgung 57 und eine Kalenderuhr 58.

Die Schnittstelle 5 kann einem mechanischen, optischen und/oder induktiven Stecker, einem Kartenleser, einer drahtlosen Übertragungseinheit, einem Display, einem Sendemodul, einem Drucker und/oder sonstigen Vorrichtungen entsprechen. Der Zugriff zur Schnittstelle 5 sollte - beispielsweise über Schlüsselwörter mit Kriptoalgorithmen - manipulationssicher sein.

Sind kapazitive Beschleunigungsensoren innerhalb des Gehäuses 10 angeordnet, so wird innerhalb desselben - entsprechend der erforderlichen Voreinstellung zur Festlegung der Frequenzeigenschaften des Sensors - ein ganz bestimmter Luftdruck herrschen. Wie weiter unten, insbesondere anhand der Figuren 11 bis 18, dargestellt ist, ist damit eine zu den dort beschriebenen Manipulationssicherungen bzw.-kontrolleinrichtungen alternative bzw. zusätzliche Manipulationssicherung möglich, da bei widerrechtlichem Öffnen des Gehäuses 10 oder eines als Zugriffsicherung ausgebildeten Teils (gegebenenfalls entsprechend einer in Fig.3a bzw. 3b angedeuteten Anordnung 21) der voreingestellte Luftdruck verloren geht und die Sensoreigenschaften verändert werden, wobei dies datenmässig über den Mikroprozessor registriert werden kann.

Über den mechanischen oder elektrischen Signalgeber 59 kann dem Verkehrsteilnehmer jegliche Art von Störungen in der Datenschalteinheit 84 oder in über die Schnittstelle 5 angeschlossenenen Peripheriegeräten mitgeteilt werden.

Die Datenschalteinheit 84 kann direkt an einem Fahrzeugteil befestigt oder gegebenenfalls in Art einer Doppelablage an einer an einem Fahrzeugteil befestigten Grundplatte abnehmbar angebracht werden. Im letzteren Fall wird die Logistik für die Datenübertragung vereinfacht, bei gleichzeitig hoher Systemsicherheit. Im ersteren Fall wird die Datenübertragung an einem Erhebungsort durch zusätzliche Vorrichtungen, wie Funk und/oder tragbare Mikroprozessoren bzw. entsprechende Schaltanordnungen vorgenommen werden.

In Fig.2 wird in schematischer Weise ein Datenerfassungssystem gezeigt, das für die unterschiedlichsten Aufgaben eingesetzt werden kann. Die in einem Fahrzeug 1 vorgesehene Datenschalteinheit 84 ist über das Kabel 16 mit dem Impulsgeber des Tachometers 17 verbunden. An einem Erhebungsort 14 werden Daten in die Datenschalteinheit geschrieben oder aus der Datenschalteinheit gelesen. Geschrieben werden fahrzeugspezifische Daten und/oder Parameter für die vorgesehenen Erfassungszwecke und/oder gegebenenfalls geänderte Algorithmen für geänderte Datenerfassungzwecke und/oder die Zeit. Gelesen werden vor allem die über die Datenschalteinheit 84 verfügbaren Daten. Diese Daten werden gegebenenfalls am Erhebungsort 14 für diverse - beispielsweise fiskalische - Zwecke weiterbearbeitet.

Aus Fig.3a-3b-3c sind Beispiele für erfindungsgemässe Schaltungen der Datenschalteinheit in Blockschaltbildform zu ersehen.

Fig.3a zeigt eine Schaltungsanordnung für eine Datenschalteinheit 84 mit einer ersten Ermittlungseinheit 2 mit einem Eingang 18, über den beispielsweise Weg-Impulse verfügbar sind, und eine zweite Impulseinheit 3a mit einer Sensoreinheit 19, der die Impulse an die erste Ermittlungseinheit 2 liefernden Sensoreinrichtung entsprechend, in diesem Fall gegebenenfalls eine Beschleunigungssensoreinheit, einen Vergleicher 23, einen Mikroprozessor 24, einen Speicher 54, eine Datenschnittstelle 5 mit angeschlossener EDV-Anlage 6.

Die über die Sensoreinheit 19 zur Verfügung gestellten Impulse, gegebenenfalls in Form von Beschleunigungswerten, werden durch eine für die Signalvorbereitung vorgesehene elektronische Schaltung 20 aufbereitet, die über den Eingang 18 eingehenden Impulse - gegebenenfalls Wege-Impulse - werden mittels einer Aufbereitungseinheit 22 vorbereitet. Die erhaltenen Werte werden in einem Vergleicher 23 verglichen. Das Vergleichsergebnis wird einem Mikroprozessor 24 übergeben, der die ermittelten Daten verwaltet und vorzugsweise im Speicher 54 ablegt.

Das Gehäuse 10 kann zugriffssicher ausgebildet sein (eine solche Anordnung 21 ist strichpunktiert angedeutet). Dazu können beispielsweise Schalter und/oder Lichtschranken und/oder andere Sensoren eingesetzt werden, um einen unbefugten Zugriff zum Inhalt des Gehäuses 10 festzustellen und/oder zu verhindern. Die Feststellung eines unbefugten Zugriffs wird entweder gespeichert oder es werden - gegebenenfalls auch alternativ - aufgaben-abhängige Vorkehrungen über die Schaltung getroffen. Zusätzlich oder alternativ könnten Speicherbereiche gegen unbefugten Eingriff geschützt werden. Solche Zugriffssicherungen sind beispielsweise aus EP 0 325 506, EP 0 378 306 oder den Produktunterlagen Thomson und Dallas zu entnehmen.

Ein Identifikationsmerkmal 15, das entweder zur Identifikation des Fahrzeugs herangezogen werden kann oder das als Manipulations-Erkennungs-Einrichtung dienen kann, gegebenenfalls einer der anhand der Figuren 11 bis 18 beschriebenen Einrichtungen entsprechend ausgebildet, ist ebenfalls innerhalb des Gehäuses 10 angeordnet.

Vergleicher 23 und Mikroprozessor 24 bilden eine Auswerteschaltung 9a.

Die erste oder die zweite Ermittlungseinheit 2 oder 3 können ihre Daten aus Sensoreinheiten unterschiedlicher Art beziehen. Es kann sich um beispielsweise Streckenimpuls-, Beschleunigungs-, Geschwindigkeits-, Neigungswinkel-, GPS-Positionsermittlungs- Drucksensor-, optische Rotations-, Gyroskop-, Lärmsensor-, Kompass-, Funk-, Wegmess-, Magnetfeld- oder Induktivsensoreinheiten handeln.

Die Anordnung der Fig.3b entspricht jener der Fig.3a, wobei die aus den beiden Ermittlungseinheiten 2 und 3a erhaltenen Daten zunächst lediglich tabellarisch im Speicher 54 abgelegt werden und - ausserhalb der Datenschalteinheit 84b - in einem in der einen Vergleicher 23 aufweisenden EDV-Anlage 6 verglichen und ausgewertet werden.

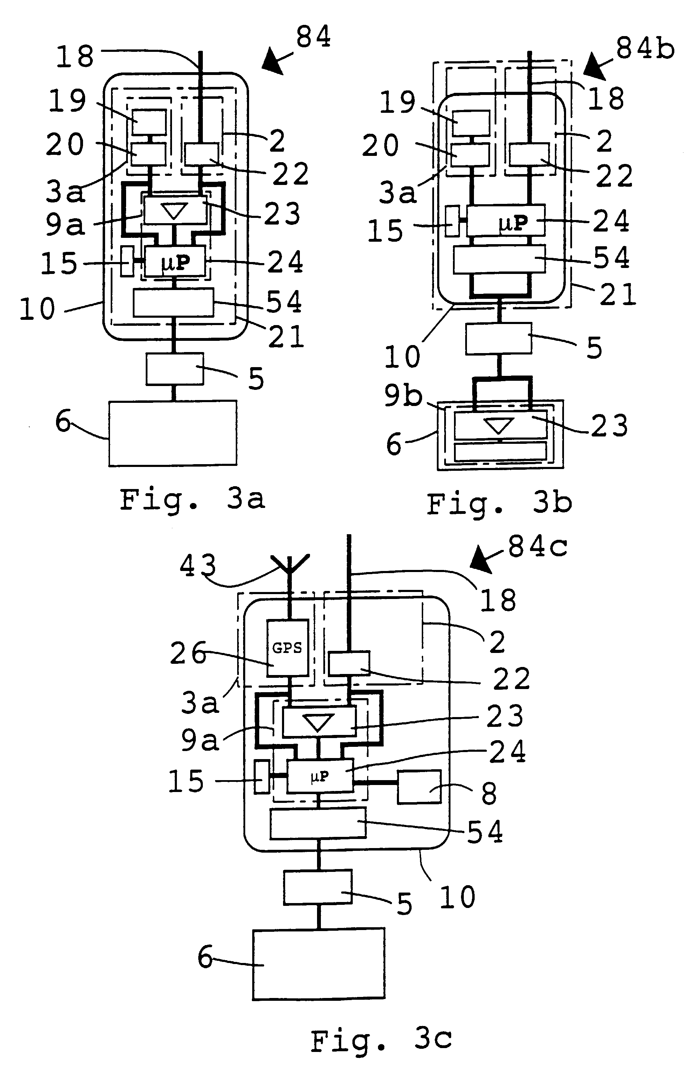

In Fig.3c ist eine alternative Ausbildung einer Datenschalteinheit 84c dargestellt, bei der die zweite Ermittlungseinheit 3c eine GPS-Schaltung 26 umfasst, die mit einer in dem Gehäuse 10 oder ausserhalb des Gehäuses 10 angeordneten Antenne 43 verbunden ist. Die so erhaltenen Positionsdaten des Fahrzeugs und die über die erste Ermittlungseinheit 2 verfügbaren weg-abgeleiteten Werte werden dem Vergleicher 23 zur Verfügung gestellt.

Die - im Speicher 54 gegebenenfalls tabellarisch abgelegten - GPS-Werte können beispielsweise auch dazu verwendet werden, eine die jeweiligen Fahrstrecken in geographischer Hinsicht berücksichtigende Bewertung durchzuführen. Damit könnte beispielsweise der Stadt- und Landverkehr unterschiedlich besteuert werden. Auch für Erhebungszwecke - seien sie rein statistischer oder Verkehrs-logistischer Natur - können sie eingesetzt werden.

Gegebenenfalls kann das GPS-System zusätzlich einem Datenermittlungssystem, wie in Fig.3a oder 3b dargestellt, zugeordnet werden. Es kann auch, wie bereits oben angedeutet, anstelle der ersten Ermittlungseinheit 2 vorgesehen sein.

Für manche Aufgaben kann eine Information ausreichend sein, die auf dem Vergleich eines Signals, das allein die Tatsache des Bewegungszustands des Fahrzeugs signalisiert und das beipielsweise über Rotationssensoren verfügbar wird, mit dem Zustand eines Impulszugangs beruht - über den beispielsweise von der fahrzeugeigenen Weg-Impulseinheit stammende Impulse einer Ermittlungseinheit zugeführt werden. Über den Signalgeber 59 (Fig.1) können widersprüchliche Informationsgehalte signalisiert werden, bzw. deren Auftreten im Speicher 54 - gegebenenfalls zeitbezogen - abgelegt und damit zur Kontrollzwecken wieder verfügbar werden. Manipulationen des Impulseingangs können allerdings nicht ausgeschlossen werden.

Fig.4a und 4b zeigen eine Beschleunigungs-Sensoreinheit 19a für die Ermittlung der Fahrtbeschleunigung mit zwei Beschleunigungssensoren 38a und 38b, deren Ebenen rechtwinklig zueinander liegen. Dies ist eine aus geometrischen Gründen bequeme, aber nicht zwingende Anordnung. Für andere Relativlagen ändern sich die Berechnungen entsprechend.

Die Ermittlung der Fahrtbeschleunigung wird in Zusammenhang mit den über die aus der ersten Ermittlungseinheit 2 anfallenden Weg-Impuls-abhängigen Signalen erfolgen. Erfolgen diese in konstanten Zeitabständen, so wird der durch Lot und Fahrzeugneigung definierte Winkel Bo ermittelt (Fig.4a).

$$Bo = Atan\ (G2/G1)$$

Die Sensoren bzw. deren Auswerteschaltung(en) werden in bestimmten Zeitabständen - in jedenfalls unbeschleunigtem Zustand des Fahrzeugs - auf die Nulleinstellung nachkorrigiert.

Wird aufgrund der eingehenden Wegimpulse eine Zustands- oder Geschwindigkeitsänderung feststellbar, kann dann aufgrund des letztberechneten Winkels Bo die horizontale Fahrtbeschleunigung Ga (Fig.4b) für ein bestimmtes, vorzugsweise kurzes Zeitintervall, bestimmt werden:

$$Ga = G1*sin\ (Bo) - G2*cos\ (Bo)$$

Der Winkel B zwischen Lot und resultierender Beschleunigungskomponente kann - bei Verwendung von Neigungssensoren - entsprechend Fig.5 direkt bestimmt und beispielsweise in einer Tabelle des Mikroprozessors in Ga konvertiert werden.

Bei Einsatz nur eines Beschleunigungsensors kann Bo wie folgt bestimmt werden:

$$Bo = f\ (G1),$$

wobei
f durch das weiter unten beschriebene, statistische Verfahren ermittelt werden kann.

Die horizontale Beschleunigungskomponente Ga ergibt sich dann zu

$$Ga = G1 * sin\ (Bo)$$

Die Berechnung dieser Daten erfolgt repetitiv in kleinen Zeitabschnitten von beispielsweise 2 bis 100 msek, wobei die Aufnahme der Daten auch von bestimmten äusseren Konditionen, die durch von anderen Sensoren gelieferte Impulse - beispielsweise auch Wegimpulse - ausgelöst werden, abhängig gemacht werden kann.

Die Grösse der beiden Beschleunigungsvektoren Ga (horizontaler Vektor) und Gv (Vektor in Fahrtrichtung) ist für die gewünschten Auswertungszwecke als gleich anzusehen. Das würde beispielsweise bei einer Strassenneigung von 2% zu einem Messfehler von +0 mg führen, bei einer Strassenneigung von 10% (max. Neigung bei Autobahnen) von 0,4 mg und bei 16% Strassenneigung (sehr steile Strassen) von 1,2 mg.

Die aus der ersten Ermittlungseinheit stammenden, wegabhängigen Werte werden beispielsweise in folgender Weise ausgewertet: einer vorgegebenen Weggrösse werden Zeitabstände t zugeordnet. Die Veränderung der Zeitabstände t für gleichbleibende Weggrössen dient der Ermittlung der Beschleunigung. Die aus den Sensoren über die zweite Ermittlungseinheit zur Verfügung gestellten Beschleunigungswerte werden zu Zeitpunkten aufgenommen, die durch die Zeitabstände t festgelegt sind. Diese Werte können entweder die zu den jeweiligen Zeitpunkten aufgenommenen Beschleunigungswerte oder ein durch die elektronische Schaltung 20 (Fig.3a,3b) für den entsprechenden Zeitabstand t bzw. aufgrund der ermittelten Impulsdifferenzen ermittelter Mittelwert sein. Die so aus den beiden Ermittlungseinheiten verfügbaren Werte werden dann im Vergleicher 23 (Fig.3a,3b) verglichen.

Da sich der Wert des Winkels Bo während der Fahrt - in Abhängigkeit von der Fahrunterlage - ständig ändert, kann die Güte der weiter unten beschriebenen, statistischen Auswertung durch Filtrierung der errechneten Horizontalbeschleunigungswerte - gegebenenfalls durch Einsatz eines anderen Sensors, wie eines Feuchtigkeits- oder Temperatursensors - optimiert werden.

Vorzugsweise sollte mittels bekannter Testverfahren in bestimmten Abständen die Funktionstüchtigkeit der Sensoreinrichtung überprüft werden.

Ist auch der Einsatz von Gyroskopen oder von auf dem Sargnac-Effekt basierenden Winkelmessgebern, wie beispielsweise in der EP-A-0 483 993 beschrieben, möglich, so werden für den Zweck der Erfindung einfache und kostengünstige Lösungen vorzuziehen sein.

Beschleunigungssensoren unterschiedlichster Bauart und Funktionsweise können eingesetzt werden. Der Einsatz von Piezo-, Dehnmessstreifen-, Kapazitiv-, Induktiv- oder Festkörpersensoren ist möglich.

Auch Sensoren für die Bestimmung von Neigungswinkeln können eingesetzt werden und gelten als Beschleunigungssensoren im Sinne der Erfindung. Die im folgenden beispielhaft beschriebenen Neigungssensoren können auch unabhängig von der erfindungsgemässen Vorrichtung verwendet werden.

Fig.5a bis 5c zeigt einen Neigungssensor 38c, wobei Fig.5a die Anzeige für ein stehendes Fahrzeug und Fig.5b für ein beschleunigtes Fahrzeug zeigt. Fig.5c zeigt einen Schnitt längs A-A der Fig.5a. Der Neigungssensor 38c entspricht in seinem Aufbau in etwa dem einer Dosenlibelle (in gleicher Weise könnte das Gehäuse auch in etwa halbdosenförmig oder in Form eines Teilringes ausgebildet sein). Das Sensorgehäuse 64 ist bis auf eine kleine Gasblase 61 mit einer Flüssigkeit 62 oder einem Gas, gegebenenfalls auch einem entsprechendem Feststoff, gefüllt (andere Zwei-Materialien-Anordnungen sind ebenfalls möglich). Ein lichtempfindlicher Sensor 63 und eine Lichtquelle 60 sind beidseitig des Gehäuses 64 angeordnet, das wenigstens in diesem Bereich durchsichtig ist und gegebenenfalls optische Systeme aufweist, beispielsweise wenigstens eine Fresnel-Linse. Der Lichtsensor 63 ist vorzugsweise so geformt, dass eine direkte Winkelmessung des Neigungswinkels auf einem Bogen durchgeführt werden kann. Dazu können Dioden- oder Phototransistoren an einem - gegebenenfalls in bezug auf den Blasendurchmesser äusserst schmalen - Bogen angeordnet sein, wie aus Fig.6d zu ersehen ist. Damit wird es möglich, den Schwerpunkt der reflektierten und detektierten Lichtfläche oder der Punkt mit der grössten Intensität als Referenzpunkt zu detektieren. Die Auswertungsschaltung des lichtempfindlichen Sensors 63 kann integriert mit diesem auf einer Grundplatte, die als Teil des Gehäuses 64 ausgebildet ist, angeordnet sein.

Da vorzugsweise die gleiche Datenschalteinheit ohne aufwendige Voreinstellungen an unterschiedlich geneigten Fahrzeugteilen angebracht werden sollte (beispielsweise ist für die Montage an der Windschutzscheibe unterschiedlicher Fahrzeugtypen mit einer unterschiedlichen Neigung der Scheibe zu rechnen), sollten Sensoren eingesetzt werden, die in unterschiedlichen Winkelstellungen gleichermassen funktionstüchtig sind. Durch eine geeignete Wahl der Füllung und/oder der Kavitätsform des Sensors kann der Einfluss der für die Bestimmung der relevanten Beschleunigungskomponente nicht relevanten vertikalen und horizontalen Beschleunigungskomponenten minimiert werden. Beispielsweise könnte die die Libelle bestimmende Kavitätsform als Hohlzylinder oder als ringförmiges Rohr bzw. als Zwischenform zwischen den beiden ausgebildet sein.

Fig.6a bis 6c zeigt drei Ausbildungsvarianten von Neigungssensoren 38d, 38e und 38f in einem der Fig.5c entsprechenden Querschnitt, deren Gehäuse jeweils einen Aussenring 68 aus lichtdichtem Material aufweist und zwei Flansche 65,66 aufweist, die wenigstens im Bereich der Blase 61 lichtdurchlässig sind bzw. den lichtempfindlichen Sensor 63 an der diesem Bereich zugewandten Seite angeordnet haben. Die Kavitätsform der verschiedenen Neigungssensoren ist derart gewählt, dass der Einfluss von vertikalen Beschleunigungsimpulsen möglichst zu vernachlässigen ist. Bei dem in Fig.6a gezeigten Neigungssensor 38d ist der lichtempfindliche Sensor an der der Kavität zugewandte Seite des Flansches 66 angeordnet. Der Sensor 38e der Fig.6b weist eine die Kavität in ihrem mittleren, besonders schmal ausgebildeten Bereich beidseitig abdeckende, lichtundurchlässige Schicht 69 auf. Bei dem Sensor 38f der Fig.6c ist der Flansch 66c als Fresnel-Linse ausgebildet, die somit einen integrierten Bestandteil des Gehäuses darstellt. Anstelle der Fresnel-Linse könnten auch andere geeignete, optische Vorrichtungen vorgesehen werden.

Als optische Sensoren können PSD-Sensoren eingesetzt werden, die allerdings den Nachteil haben, nicht in Form eines Bogens angeordnet werden zu können. Für den Zweck der Erfindung müssten zumindest zweidimensionale PSD-Sensoren eingesetzt werden, was eine komplexe Schaltung erfordern würde.

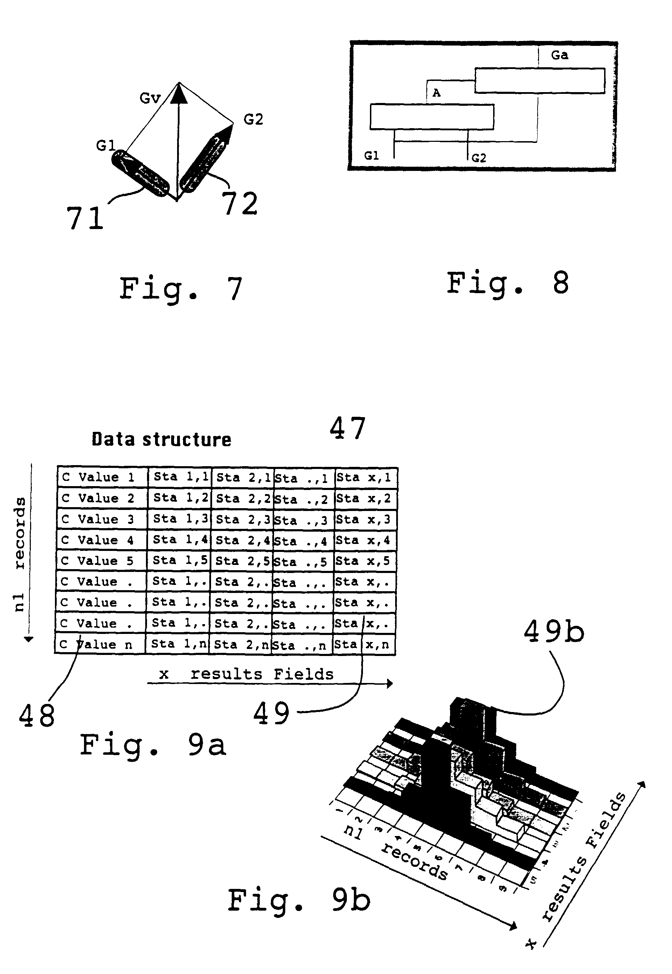

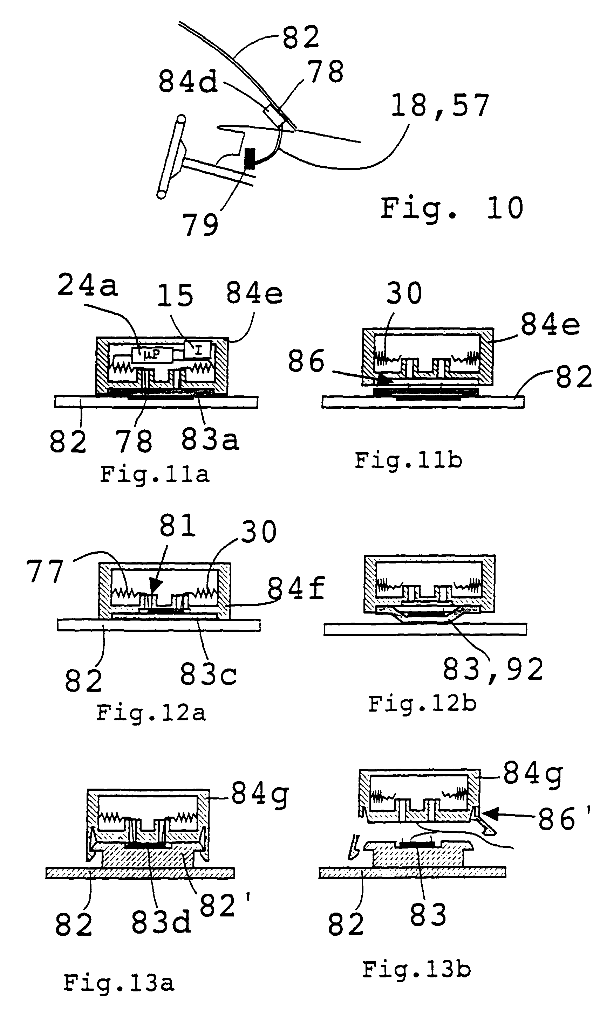

In Fig.7 wird eine vorteilhafte Anordnung zur Ermittlung der Beschleunigung gezeigt. Bei ungenauer und gegebenenfalls auch unsachgemässer Montage der Datenschalteinheit und damit der Ermittlungseinheit können sich beim Einsatz von unidirektionellen Beschleunigungsensoreinheiten Messfehler ergeben, die für eine ungünstige statistische Verteilung der Vergleichswerte verantwortlich sind, womit die Genauigkeit der Eichung, wie auch weiter unten beschrieben, bzw. ein korrekte Auswertung der Manipulationsdaten (entsprechend Fig.9) nicht mehr gewährleistet sind. Es wird daher vorgeschlagen, die zweite Ermittlungseinheit mit zumindest zwei Beschleunigungseinheiten 71 und 72 für unterschiedliche Messrichtungen G1 und G2 zu versehen. Jede dieser Beschleunigungseinheiten kann wiederum in oben dargestellter Weise zwei Beschleunigungssensoren aufweisen.

In Fig.8 ist in schematischer Weise das Berechnungsverfahren für eine Anordnung nach Fig.7 dargestellt. Die Orientierung aller Sensoren ist von der Konstruktion her bekannt. Mittels einem dem für die Eichung bzw. die Ermittlung der Manipulationsdaten entsprechenden, gegebenenfalls statistischen, Berechnungsverfahren können Relationsparameter A zwischen den über die Beschleunigungseinheiten 71 und 72 zur Verfügung gestellten Werten und den gesuchten Beschleunigungswerten Ga ermittelt werden. Mit diesen Parametern und den aus zumindest einer Beschleunigungseinheit 71 bzw. 72 ermittelten Werten kann der gesuchte Beschleunigungswert Ga errechnet werden.

In Fig.9a und 9b ist dargestellt, wie die Verwaltung der die über die Ermittlungseinheiten gelieferten Daten enthaltenden Speicher erfolgt. Die Daten werden in Speicherstellen abgelegt, wobei der für diesen Zweck benutzte Speicherbereich einer aus Linien und Kolonnen bestehenden Datenstruktur 47 entspricht. Beispielsweise enthält eine Kolonne 48 Referenzwerte, die der anfallenden Häufigkeit eines bestimmten Vergleichswertes entspricht. Wenn ein aus dem Vergleicher 23 (Fig.3a bis 3c) erhaltener Vergleichswert einem Referenzbereich entspricht, wird der Inhaltswert 49 einer bestimmten Kolonne in derselben Linie mit 1 inkrementiert.

Die Datenstruktur 47 besteht aus mehreren Kolonnen, die beispielsweise zeitbezogene, geschwindigkeitsbezogene, positionsbezogene Referenzklassen darstellen, deren Inhalt auf diese Weise bestimmt wird, wobei die fallweise Inkrementierung zu bzw. für unterschiedliche Zeitabstände in jeweils anderen Kolonnen vorgenommen werden kann.

Dieses Verfahren entspricht einer statistischen Auswertung der gemessenen Werte, wodurch trotz gegebenenfalls nicht ganz genauer Messungen eine in qualitativer und quantitativer Hinsicht ausreichend genaue Bestimmung möglich wird. Dank dieses Verfahrens kann eine Einschätzung von Manipulationsvorgängen und eine Nachführung der Umrechnungsparameter (Eichung) für die aus der Impulseinheit der ersten Ermittlungseinheit zur Verfügung gestellten Daten erfolgen. Der Einsatz eines oder auch mehrerer Sensoren für die Ermittlung der effektiven, horizontalen Beschleunigung des Fahrzeugs wird damit möglich.

Zur Durchführung dieses Verfahrens wird vorzugsweise wenigstens eine Rechnereinheit (Microprozessor oder Microcontroller) mit Speicher (RAM oder NV-RAM oder EEPROM) und dazugehörigem Schwingkreis verwendet.

Aus der Form der statistischen Verteilung 49b in den jeweiligen Kolonnen, wie in Fig.9b dargestellt, kann auf eine normale oder abnormale Funktion des Datenerfassungssystems geschlossen werden.

Durch die Untersuchung der im Speicher gespeicherten, statistischen Verteilung 49b, die insbesondere an entsprechenden Erhebungsorten stattfindet, können Manipulationsversuche oder fehlerhaftes Funktionieren des Datenerfassungssystems festgestellt werden. Aber auch bereits während der Datenerfassung selbst können Massnahmen gesetzt werden, wie beispielsweise die Meldung eines Fehlers über den Signalgeber 59 (Fig. 1) und/oder die Durchführung von für die Folge-Berechnung der Daten massgebenden Aufgaben und oder das Löschen des gesamten Speicherinhalts.

Für die Nachführung der Umrechnungsparameter (quasi-kontinuierliche Eichung) wird auf die Klasse mit der maximalen Häufigkeit zugegriffen, wenn ein bestimmter, vorwählbarer Unterschied zu den benachbarten Kolonnen überschritten wird. Die Klasse mit der maximalen Häufigkeit entspricht der Güte der der ersten Ermittlungseinheit zur Verfügung gestellten Impulse. Je deutlicher die Häufigkeitsverteilung der Klassen und je kleiner die Klasse ist, desto genauer wird die Eichung. Dieser Eichvorgang wird in bestimmten Zeitabständen vorgenommen, in Abhängigkeit von Zeit oder Anzahl der Vergleichsverfahren oder auch in Abhängigkeit vom jeweils zurückgelegten Weg.

Aufgrund der Datenstruktur wird das System in einer gewissen Weise lernfähig.

Dieses Verfahren ergibt damit gleichzeitig die Möglichkeit, Manipulationsversuche wirkungs- und damit nutzlos zu machen, welche eine Einflussnahme auf die Impulseinheit der ersten Ermittlungseinheit beinhalten, sei es beispielsweise durch Veränderung der mechanischen Übersetzung zwischen Rädern und Impulsgeber oder durch einen Austausch der Räder selbst. Ausserdem wird bei der Nachrüstung von Fahrzeugen der administrative und/oder Eichaufwand reduziert, die Nachrüstung wird kostengünstiger.

Dieses Verfahren bzw. die Vorrichtung können beispielsweise für Tachometer, Taxameter, Geschwindigkeitsregler, Geschwindigkeitsbegrenzungsvorrichtungen, Restwegschreiber und/oder andere Vorrichtungen dieser Art, die zuverlässige, manipulationsfreie und fälschungssichere Daten erarbeiten bzw. abgeben müssen, eingesetzt werden. Damit wird die Eichung jedwelcher Art von Wegmesseinrichtungen autonom, manipulations- und fälschungssicher durchführbar.

In Fig.10 wird eine für die Realisierung einer fahrleistungsabhängigen Bewertung günstige Anordnung der fahrzeugbezogenen Datenerfassung gezeigt. Die Datenschalteinheit 84d ist vorzugsweise in der unteren Mitte der Windschutzscheibe 82 - gegebenenfalls auch mit einem Doppelkklebeband geeigneter Haftkraft - befestigt, da dort für jeden Fahrzeugtyp die Orientierung der Windschutzscheibe gegenüber der Fahrtrichtung senkrecht ist. Manipulationskontroll- bzw. Identifizierungsmerkmale 78, die elektronische, magnetische, mechanische oder aufgedruckte oder eingeprägte Identifikationszeichen enthalten, können durch die Windschutzscheibe direkt erkennbar angeordnet sein, bzw. über ansteuerbare Zeichen bzw. elektronische Anzeiger überprüft oder abgefragt werden.

Eine Versorgungseinheit 79 dient der Stromversorgung der Datenschalteinheit 84d und der Aufbereitung bzw. Anpassung der der ersten Ermittlungseinheit zuzuleitenden Impulssignale. Eine Verbindung, die gegebenenfalls auch drahtlos sein kann, entspricht der in Fig.1 dargestellten Stromversorgung 57 bzw. dem in Fig.3a und 3b dargestellten Impulseingang 18. Die Versorgungseinheit 79 ist fahrzeugspezifisch, die Datenschalteinheit 84d systemspezifisch. Durch diese Anordnung werden die fahrzeug- und systemspezifischen Funktionsblöcke getrennt, was sich insbesondere für die Montage und Logistik als kostengünstig erweist.

Für die Datenschalteinheit kann auch eine eigene Batterie vorgesehen werden, die, wie auch in Fig.1 angedeutet, gegebenenfalls nur im Fall des Ausfalls der fahrzeugspezifischen Stromversorgung eingesetzt wird.

Wie einleitend dargestellt, wird es für die Durchführung bestimmter Aufgaben notwendig, Manipulationen an der Datenschalteinheit zu unterbinden, bzw. vorgenommene Manipulationen erkennbar zu machen. Die oben beschriebene Möglichkeit, Manipulationen aufgrund der im Speicher abgelegten Daten zu erkennen, haben sich auf Manipulationen an den fahrzeugspezifischen Bauteilen, wie Impulsgebern, Übersetzungen oder Zuleitungen, bezogen.

Es werden im folgenden verschiedene Anordnungen beschrieben, die die Möglichkeit bieten, Manipulationen an der Datenschalteinheit zu erkennen. Solche Manipulations-Kontrolleinrichtungen können unabhängig von dem für die Manipulations-Kontrolle der Datenschalteinheit vorgesehenen Zweck auch für andere Einrichtungen eingesetzt werden. So soll auch in den folgenden Darstellungen die Datenschalteinheit nur beispielhaft für andere, manipulationssicher, d.h. insbesondere nicht unbefugt demontierbar, befestigte Bauteile gesehen werden. Der in den folgenden Beispielen als Datenschalteinheit mit dem Bezugszeichen 84 bezeichnete Bauteil kann an sich auch nur als Grundplatte für eine daran angeordnete Datenschalteinheit dienen.

Fig.11a zeigt eine Datenschalteinheit 84e, die auf einem Fahrzeugsbestandteil 82 fest montiert ist. Ein systembezogenes Identifikationsmerkmal 15 ist der Schalteinheit zugeordnet und mit dem Mikroprozessor 24a verbunden. Ein fahrzeugbezogenes Identifikationsmerkmal 78 wird durch die Schalteinheit zugangmässig geschützt. Damit kann ein fälschungssicherer Systemverbund zum Fahrzeug oder eine fäschungssichere Fahrzeugidentifikation realisiert werden.

Ein sogenannter Triggerteil 83a ist zwischen Datenschalteinheit 84e und Fahrzeugbestanteil 82 angeordnet, wobei damit gleichzeitig das fahrzeugspezifische Identifikationsmerkmal 78 abgedeckt wird. Unter einem Triggerteil 83a soll im folgenden ein mittel- oder unmittelbar zwischen der Datenschalteinheit 84e und dem Fahrzeugbestandteil 82 angeordnetes Zwischenteil zu verstehen sein, das beim voll- oder anteilsmässigen Auseinanderschieben oder -nehmen der Datenschalteinheit 84e vom Fahrzeugbestandteil 82 ein mechanisches, elektrisches, chemisches oder optisches Signal (in weitem Sinn) auslöst. Der Triggerteil kann gegebenenfalls auch ein Fahrzeugbestandteil selbst sein, beispielsweise die Windschutzscheibe.

Wie aus Fig.11b zu ersehen ist, wird bei Lösen der Datenschalteinheit 84e von dem Fahrzeugteil 82 ein elektrischer Leiter 30 zerstört, der unzugänglich innerhalb der Datenschalteinheit 84e liegt. Bei diesem Vorgang kann ein Signal ausgelöst werden, das im Mikroprozessor verarbeitet und im Speicher, gegebenenfalls zeitbezogen, abgelegt wird.

Eine Solltrennfläche 86 ist mittel- oder unmittelbar zwischen Datenschalteinheit 84e und Fahrzeugbestandteil 82 angeordnet. Diese Solltrennfläche 86 kann sowohl die Datenschalteinheit 84e als auch den Fahrzeugbestandteil 82 mit dem Triggerteil 83a - gegebenfalls als Feder ausgebildet - verbinden. Sie kann in gleicher Weise eine mechanische oder chemische Schwachstelle des Triggerteils 83a selbst sein, deren mechanischer Widerstand kleiner als der der anderen relevanten Verbindungsflächen ist.

Diese Solltrennfläche 86 bzw. Solltrennstellen 86' (Fig.13b) bzw. alle anderen, zwischen der Datenschalteinheit 84g und dem Fahrzeugbestnadteil 82 sind in normalem Betriebszustand vor äusseren Zugriffen geschützt angeordnet.

Der elektrische Leiter 30 könnte auch eine mechanische Verbindung zu einem vorgespannten Schalter darstellen, bei Bruch wir dien Zustandsänderung bewirkt.

Fig.12a und 12b zeigen eine den Fig.11a und 11b entsprechende Ausbildung. Bei Trennen des Datenschalteinheit 84f von dem Fahrzeugbestandteil 82 wird der dazwischen angeordnete, plastisch verformbare Triggerteil 83c teilweise von beiden Teilen abgehoben. Der elektrische Leiter 30 wird unterbrochen und kann, da er teilweise als Feder 77 ausgebildet und durch zwei Ausnehmungen 81 geführt ist, von aussen nicht mehr wiederhergestellt werden.

Fig.13a und 13b zeigen eine Anordnung, bei der die Datenschalteinheit 84g mit einem dem Fahrzeugbestandteil 82 direkt zugeordneten, und mit diesem fest verbundenen Zwischenteil 82' über einen Schnappverschluss mit einer Sollbruchstelle 86'verbunden ist. Anstelle der Sollbruchstelle 86' können die Arme des Schnappverschlusses auch unelastisch verformbar ausgebildet sein, so dass ein neuerliches Aufbringen der Datenschalteinheit nach Entfernen derselben nicht mehr möglich wird.

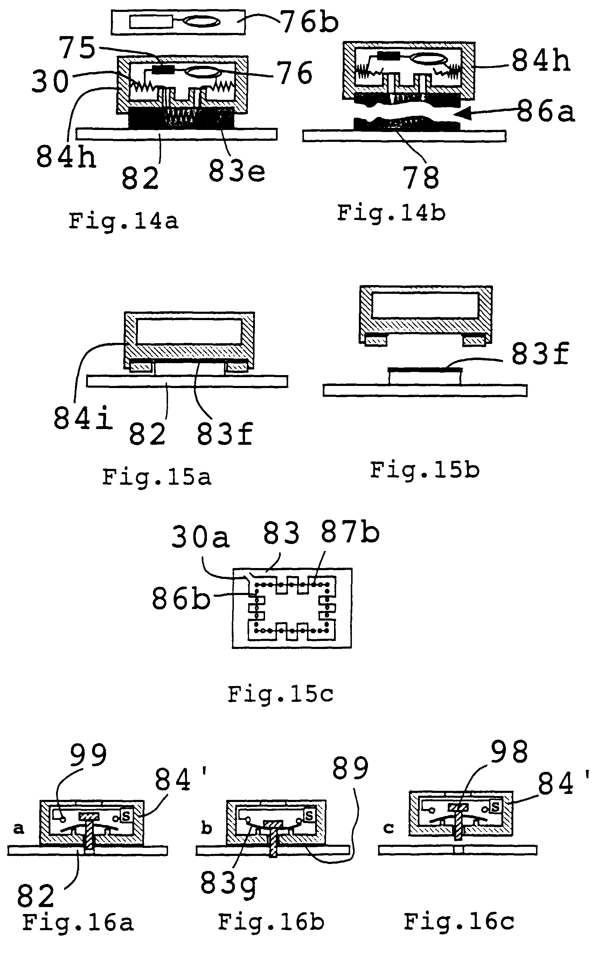

Fig.14a und 14b zeigen eine Ausbildung, bei der das Triggerteil 83 eine Schwachstelle 86a aufweist. Wird die Datenschalteinheit 84h entfernt, so wird das Triggerteil 83e zerstört. Die Schwachstelle 86a kann als mechanische Schwachstelle 86a ausgebildet und/oder durch ein bestimmtes Material, wie beispielsweise Karton, Kunstschaum, Kunststoff, Festmaterial usw., gebildet sein.

Über eine Identifikationsschaltung 76b wird bei ungestörten Betrieb (Fig.14b) ein Identifikationstransponder 75 (Produktunterlage EM Electronic Marin Product: Read Only Contactless Identification H 4001) lesbar. Der Transponder 75 besitzt eine Antenne 76. Über den elektrischen Leiter 30 wird das System geschlossen. Bei Bruch des elektrischen Leiters 30 wird der Transponder 75 nicht mehr ansprechbar. Der Transponder 75 (es können auch mehrer Transponder vorgesehen werden) kann sowohl in der Schalteinheit 84h als auch im Fahrzeugbestandteil 82 angeordnet sein. Der Transponder 75 kann mit weiteren elektronischen Elementen, wie Speicher oder Mikroprozessoren, verbunden sein.

In Fig.15a bis 15c zeigen ein vorzugsweise aus brüchigem Material, wie Glas oder Kunststoff bestehendes Triggerteil 83f, an dem ein Leiter 30a angeordnet ist. Perforationen 87b definieren eine Sollbruchlinie 86b. Wird die Datenschalteinheit 84i unbefugt abgehoben, bricht, wie in Fig.15b zu sehen ist, das Triggerteil 83f ab, der beispielsweise entsprechend Fig.15c angeordnete Leiter 30a wird mehrfach gerissen.

Fig.16a bis 16c zeigen drei unterschiedliche Bedienungsphasen. Ein Bauteil 84', das beispielsweise eine Zwischenträgerplatte für die Datenschalteinheit sein kann, wird über ein konventionelles Befestigungselement, wie eine Schraube 98, an dem Fahrzeugbestandteil 82 befestigt. Fig.16a zeigt die Phase vor der Montage. Über ein blattfederartiges Triggerteil 83g werden erst bei erfolgter Montage und in normalem Betriebszustand (Fig.16b) zwei Kontakte 99 geschlossen, so dass über einen Signalgeber S ein entsprechendes Signal im Speicher - vorzugsweise zeitbezogen - abgelegt werden kann. Wird das Bauteil 84' - gegebenenfalls auch befugt - entfernt (Fig.16c), öffnen die Kontakte 99, über den Signalgeber S wird ein Signal verfügbar, das entweder - wieder zeitbezogen - abgelegt wird und/oder den Signalgeber 59 (Fig.1) aktiviert.

Alternativ oder auch zusätzlich könnte auch einer der Kontakte 99 mit einer Schmelzsicherung verbunden sein.

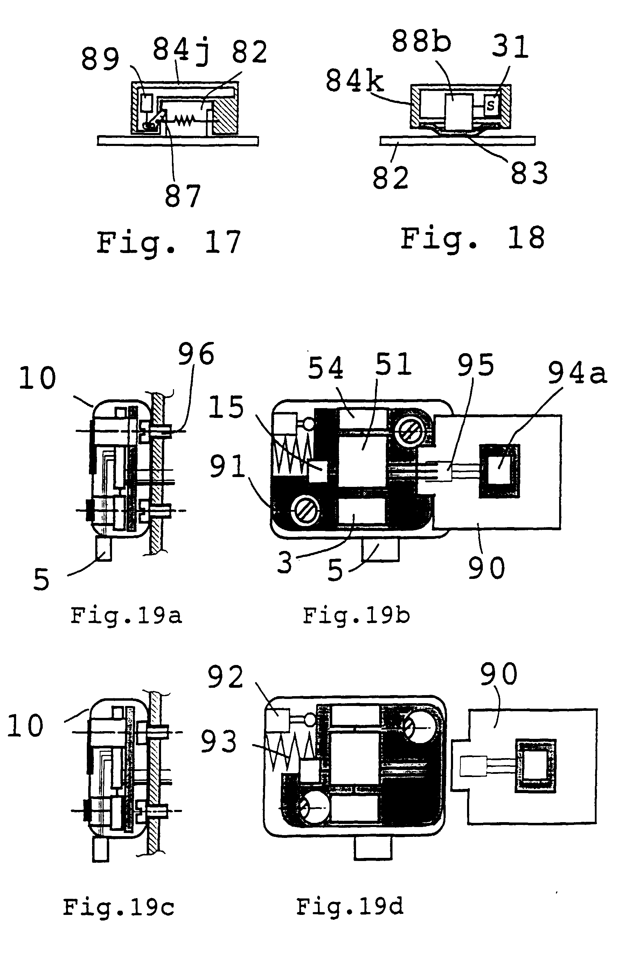

Fig.17 zeigt eine Einrichtung, bei der bei Demontage der Datenschalteinheit 84j über eine Klinke 87 ein Schalter oder Signalgeber 89 betätigt wird, der gegebenenfalls in anhand der Fig. 16a bis 16c beschriebenen Weise wirkt.

Fig.18 zeigt eine Anordnung, bei der das Entfernen der Datenschalteinheit 84k von dem Fahrzeugbestandteil 82 über das einem Schalter oder einem Signalgeber 31 zugeleitete Signal eines gegebenenfalls als Drucksensor ausgebildeten Sensors 88b überwachbar wird.

In Fig.19a bis 19d wird eine Anordnung gezeigt, die gegebenenfalls für sich allein oder auch in Kombination mit einer der oben beschriebenen Anordnungen eingesetzt werden kann. Der Zugang zu wenigstens einer beispielsweise als Schraube ausgebildeten Befestigungseinrichtung 96 kann durch eine Verriegelungsplatte 91 abgedeckt werden. Wird die Verriegelungsplatte 91 verschoben, so wird ein - gegebenenfalls auch als elektromechanisches Verriegelungssystem ausgebildeter - Schalter 92 betätigt. Ein elektronischer Schlüssel 90 ermöglicht die Registrierung eines schlüssel- und systemspezifischen Identifikationsmerkmals 94a im Speicher 54 über eine Schnittstelle 95. Die registrierten Daten werden vorzugsweise auch die Zeit und Datum enthalten.

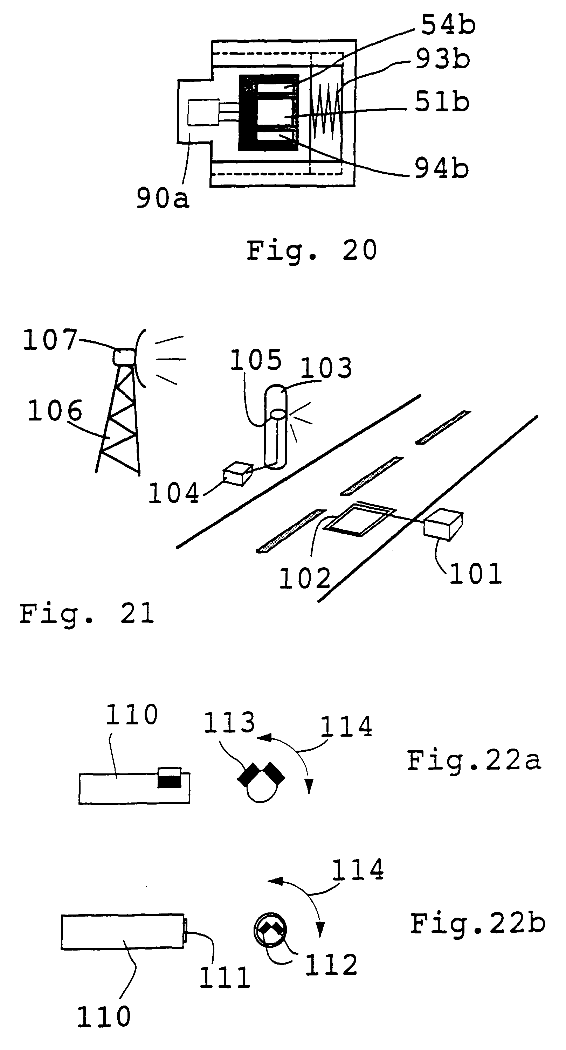

Fig.20 zeigt einen elektronischen Schlüssel 90a mit einem Speicher 54b. Zugriffe werden darin registriert, das Freigeben der Verriegelungsplatte 91 (Fig.19b) durch den Schalter 92 (Fig.19b)wird erst nach Erkennen des spezifischen Identifikationsmerkmals 94b möglich. In diesem Fall ist eine Feder 93b vorgesehen, deren Federstärke geringer ist als die der die Verriegelungsplatte 91 offenhaltenden Feder 93 (Fig.19d)

Auf diese Weise können alle an einem vollständig abgeschlossenes Datenerfassungssystem vorkommenden Vorgänge inklusive der für den Unterhalt notwendigen Zugriffe erfasst werden.

Voraussetzung für ein klagloses Funktionieren des Systems ist sicherlich, dass notwendige Montage-, Prüf- und gegebenenfalls auch Demontagevorgänge in speziell vorgesehenen, anerkannten Montage- oder Prüfstellen vorgenommen werden.

Entsprechend den oben beschriebenen Anordnungen kann auch die Identifikation von Fahrzeugen geschehen, insbesondere auch die von gestohlenen Fahrzeugen. Es kann beispielsweise die Gültigkeit von bestimmten Kennzeichen durch das Fehlen einer elektronischen Plombierung festgestellt werden kann.

In Fig.21 sind Anordnungen dargestellt, die alternativ zu GPS-Systemen eingesetzt werden können. Es ist möglich, über Funksysteme 106,107 den Standort-Impulse abzustrahlen. Diese Signale werden durch geeignete Empfänger im Fahrzeug aufgenommen. Auch am Strassenrand angeordnete Funksysteme 103,104,105 oder solche, die in der Fahrbahn eingebaute Antennen 101,102 aufweisen, sind bekannt. Alle diese Systeme funktionieren mit im Fahrzeug eingebauten und für das System geeigneten Empfängern und/oder Sendern. Derartige Systeme können in oben beschriebener Weise zur Bestimmung von Wegstrecken bzw. als Wegimpulsgeber verwendet werden.

Fig.22a und 22b zeigen die Anordnung von einem oder mehreren Beschleunigungssensoren 112 und 113, die zu Montage- und gegebenenfalls auch Korrekturzwecken - um einen für die Messung vorteilhafte Winkelstellung zu gewährleisten.- auf einer händisch oder mittels Getriebe drehbaren Achse 110 montiert sind. Die Beschleunigungssensoren 113 der Fig.22b sind dabei rechtwinklig zueinander auf einer Ebene als Chip ausgebildet. Diese Ausbildung zeichnet sich durch ein beonders vorteilhaftes Kosten/Leistungsverhältnis aus, da solche Chip-Einheiten durch Micromachining, eigentlich "Surface-Micromachining", herstellbar sind.

Die dieser Anmeldung zugrunde liegende Schweizer Patentanmeldung Nr.2808/92-2, angemeldet am 7.September 1992, gilt im Rahmen dieser Anmeldung hiermit als geoffenbart

**Patentansprüche**

1. Verfahren zum Bestimmen, Registrieren und fallweisen Auswerten von Betriebs- und/oder Fahrdaten eines Fahrzeuges (1) mit

   - wenigstens einer ersten Ermittlungseinheit (2);
   - einer Rechnereinheit (24;51) für die Verwaltung der Daten;
   - einem Speicher (54) zum Speichern der Daten, insbesondere in Abhängigkeit von der Zeit, und
   - gegebenenfalls einer dem Speicher (54) zugeordneten Datenschnittstelle (5) für den Abgriff der Daten, dadurch gekennzeichnet, dass, zur Feststellung, ob die aus der ersten Ermittlungseinheit (2) gelieferten Daten korrekt, fehlerhaft oder manipuliert sind,
   - simultan zur Speicherung der Daten aus der ersten Ermittlungseinheit (2) auch Daten bzw. deren elektronische Äquivalente aus wenigstens einer von der ersten Ermittlungseinheit (2) unabhängig - insbesondere unterschiedlich - ermittelnden, zweiten Ermittlungseinheit (3) im selben Fahrzeug (1) erfasst werden,
   - dass entweder die Daten aus den beiden Ermittlungsinheiten (2,3) im Speicher (54) gespeichert und verfügbar gemacht werden und zu einem späteren Zeitpunkt - gegebenfalls ausserhalb des Fahrzeugs (1) - Vergleichswerte gewonnen werden und einer elektronischen Analyse unterzogen werden, bei der Vergleichsdaten auf allfällige Unterschiede untersucht werden,
   - oder dass aus den Daten der beiden Ermittlungseinheiten (2,3) Vergleichsdaten gewonnen werden, in einem Speicher für einen zeitlich späteren Abgriff abgelegt und verfügbar gemacht werden und zu einem späteren Zeitpunkt einer - gegebenfalls ausserhalb des Fahrzeugs (1) erfolgenden - elektronischen Analyse unterzogen werden, bei der Vergleichsdaten auf allfällige Unterschiede untersucht werden,
   - und dass die erfassten Daten aus zumindest einer Ermittlungseinheit (2,3) in einem späteren Zeitpunkt einer ausserhalb des Fahrzeuges stehenden EDV-Anlage (6) verfügbar gemacht werden können.

2. Verfahren nach Anspruch 1 dadurch gekennzeichnet, dass

   - die Daten aus der ersten Ermittlungseinheit (2) in einer elektronischen Aufbereitungseinheit (23) intermittierend oder kontinuierlich mit vergleichbaren Daten wenigstens einer im selben Fahrzeug (1) angeordneten, von der ersten Ermittlungseinheit (2) unabhängig - insbesondere unterschiedlich - ermittelnden, zweiten Ermittlungseinheit (3) verglichen werden,
   - worauf ermittelt wird, ob die durch die erste Ermittlungseinheit (2) gelieferten Daten manipuliert oder fehlerhaft sind, oder ob sie den wahren Daten entsprechen,
   - wonach die Daten bzw. deren elektronische Äquivalente zusammen mit den Vergleichsdaten bzw. deren Äquivalenten in geeigneter Form im Speicher (54) abelegt und - gegebenfalls ausserhalb des Fahrzeugs (1) - verfügbar gemacht werden, welch letztere Daten über den Wahrheitsgehalt der der Betriebs- bzw. Fahrdaten sowie über allfällige Störungen oder Manipulationen an den Daten der ersten oder zweiten Ermittlungseinheit (2 oder 3) und gegebenenfalls an dem System selbst Auskunft geben.

3. Verfahren nach Anspruch 1 oder 2, dadurch gekennzeichnet, dass die Daten aus den beiden Ermittlungseinheiten (2,3) bzw. daraus erhaltene Vergleichsdaten für die Ansteuerung eines weiteren Verfahrens zur Verfügung gestellt werden.

4. Verfahren nach einem der vorhergehenden Ansprüche, dadurch gekennzeichnet, dass die Daten aus der ersten (2) und/oder der zweiten Ermittlungseinheit (3) nach vorgegebenen Parametern oder Algorithmen in Zahlenwerte für Folgeberechnungen umgerechnet und im Speicher (54) gespeichert oder an der Datenschnittstelle (5) zur Verfügung gestellt werden.

5. Verfahren nach einem der vorhergehenden Ansprüche, dadurch gekennzeichnet, dass jede Ermittlungseinheit (2,3) ihre Daten aus wenigstens einer der folgenden, gegebenenfalls in der entsprechenden Ermittlungseinheit (2,3) integrierten, jeweils wenigstens einen Sensor aufweisenden, Sensoreinheiten bezieht:
Streckenimpuls-, Geschwindigkeits-, Beschleunigungs-, Neigungswinkels-, GPS-Positionsermittlungs-, Drucksensor-, optische Rotations- oder Gyroskop-, Lärmsensor-, Kompass-, Funk- , Wegmess-, Induktivsensoreinheit.

6. Verfahren nach einem der vorhergehenden Ansprüchen, dadurch gekennzeichnet, dass zu den erwähnten Daten auch Daten über die jeweilige geographische Position - z.B. über eine GPS-Satelliten-Navigationseinheit (26) oder Strassenmarkierungen - gewonnen, in den Speicher (54) aufgenommen und/oder als Parameter für die Folgeberechnungen dem Rechner (24) zur Verfügung gestellt werden, wobei die Ermittlung dieser Parameter vorzugsweise über einen Vergleich mit in Tabellen festgelegten Positionsdaten erfolgt.

7. Verfahren nach Anspruch 5 oder 6, mit wenigstens einer wenigstens einen Beschleunigungssensor (38a,38b) aufweisenden Beschleunigungssensoreinheit (19a), dadurch gekennzeichnet, dass als Fahrdaten Horizontal-Beschleunigungswerte ermittelt werden, wobei

- in beschleunigungsfreiem Zustand die Winkellage Bo zwischen Fahrzeug und Lot ermittelt wird und gegebenenfalls in bestimmten Zeitabständen eine Korrektur der Nullstellung des wenigstens einen Beschleunigungssensors (38a,38b) bzw. dessen Elektronik vorgenommen wird, und
- der jeweilige Beschleunigungswert aufgrund von über einen weiteren Sensor ermittelten Daten bzw. aufgrund einer statistisch gefundenen Verteilungskurve, basierend auf dem jeweils zuletzt ermittelten Winkelwert Bo, berechnet wird.

8. Verfahren nach einem der vorhergehenden Ansprüche, dadurch gekennzeichnet, dass die beiden Ermittlungseinheiten (2,3) von Zeit zu Zeit geändert oder vertauscht werden.

9. Verfahren nach einem der vorhergehenden Ansprüche, dadurch gekennzeichnet, dass die - vorzugsweise nach vorgegebenen Plausibilitätskriterien - ermittelten Vergleichsdaten nach Häufigkeitsklassen im Speicher (54) für einen zeitlich späteren Abgriff bzw. für eine - vorzugsweise nach vorgegebenen Plausibilitätskriterien vorzunehmende - Auswertung abgelegt werden.

10. Verfahren nach einem der vorhergehenden Ansprüche, dadurch gekennzeichnet, dass die Vergleichsdaten zur - vorzugsweise in bestimmten Zeitabständen erfolgenden - Ermittlung von Umrechnungsparametern zwischen wenigstens zwei Sensoren verwendet werden, welche wenigstens einer der wenigstens zwei Ermittlungseinheiten (2,3) zugeordnet sind, womit gegebenenfalls eine quasi-kontinuierliche Eichung einer - insbesondere fahrzeugabhängigen - Sensoreinheit vorgenommen wird.

11. Verfahren nach einem der Ansprüchen 5 bis 10, dadurch gekennzeichnet, dass zumindest eine zusätzliche, wenigstens einen Sensor (8) aufweisende Sensoreinheit gleicher oder unterschiedlicher Art für den Abgriff von für die Berechnungszwecke störenden Werten, wie Temperaturextremata oder ungewöhnlichen Strassenneigungen, vorgesehen ist, die - wenn solche Störwerte anfallen - den Auswertevorgang unterbricht und/oder störungsspezifische Daten - insbesondere zeitbezogen - im Speicher (54) ablegt.

12. System zum Bestimmen, Registrieren und fallweisen Auswerten von Betriebs- oder Fahrdaten eines Fahrzeuges (1), mit einer Datenschalteinheit (84), die zumindest teilweise an einem Fahrzeugbestandteil (82) mittel- oder unmittelbar befestigt ist, mit

- wenigstens einer ersten, Daten ermittelnden Ermittlungseinheit (2)
- einer Rechnereinheit (24;51) für die Verwaltung der Daten;
- einem Speicher (54) zum Speichern der Daten, insbesondere in Abhängigkeit von der Zeit; sowie
- gegebenenfalls einer dem Speicher (54) zugeordneten Datenschnittstelle (5) für den Abgriff der Daten, dadurch gekennzeichnet, dass
- im selben Fahrzeug (1) der ersten Ermittlungseinheit (2) wenigstens eine zweite Ermittlungseinheit (3) zugeordnet ist, die unabhängig und insbesondere unterschiedlich zu der ersten Ermittlungseinheit (2) Daten ermittelt, die mit den aus der ersten Ermittlungseinheit (2) erhaltenen Daten vergleichbar sind,
- dass entweder beide Einheiten über die Rechnereinheit (24;51) mit dem Speicher (54) verbunden sind und eine gegebenenfalls ausserhalb des Fahrzeuges (1) befindliche Auswerteschaltung (9b) vorgesehen ist, die der Datenschnittstelle (5) zuordenbar oder der Rechnereinheit (24;51) zugeordnet ist,
- oder dass beide Einheiten über eine Auswerteschaltung (9a) mit dem Speicher (54) verbunden sind, die der Datenschnittstelle (5) zuordenbar oder der Rechnereinheit (24;51) zugeordnet ist,

13. System nach Anspruch 12, dadurch gekennzeichnet, dass wenigstens ein Bauteil der Datenschalteinheit, insbesondere wenigstens eine der Ermittlungseinheiten (2,3) und/oder die Rechnereinheit (24;51), zugriffsgeschützt angeordnet bzw. ausgebildet ist.

**14.** System nach Anspruch 12 oder 13, dadurchgekennzeichnet, dass die Ermittlungseinheiten (2,3) von Zeit zu Zeit - gegebenfalls programmgesteuert - veränderbar oder vertauschbar sind.

**15.** System nach einem der Ansprüche 12 bis 14, dadurch gekennzeichnet, dass jede Ermittlungseinheit (2,3) - insbesondere in ihr integriert - wenigstens eine der folgenden Sensoreinheiten aufweist:
Bewegungssensor-, Orientierungssensor-, Motordrehzahlsensor-, Streckenimpuls-, Beschleunigungs-, Neigungswinkels-, GPS-Positionsermittlungs-, Drucksensor-, optische Rotations- oder Gyroskop-, Lärmsensor-, Kompass-, Funk-, Wegmess-, Induktivsensoreinheit.

**16.** System nach Anspruch 15, mit wenigstens einer wenigstens einen Sensor (38a,38b;112;113) aufweisenden Beschleunigungseinheit (19;71,72), dadurch gekennzeichnet, dass zwei, insbesondere in einem Chip mit elektronischer Schaltung integrierte, vorzugsweise im rechten Winkel zueinander angeordnete, Teilsensoren (38a,38b;112; 113) vorgesehen sind, oder dass die Beschleunigungssensoreinheit(19;71,72) zwei Messrichtungen, die jeweils insbesondere einen rechten Winkel miteinander einschliessen, aufweist.

**17.** System nach einem der Ansprüche 12 bis 16, dadurch gekennzeichnet, dass ein oder mehrere Sensoren (112, 113) und/oder wenigstens eine der zwei Ermittlungseinheiten (2,3) auf wenigstens einer manuell oder programmgesteuert drehbaren Drehachse (110) montiert sind.

**18.** System nach einem der Ansprüche 12 bis 17, dadurch gekennzeichnet, dass ein akustischer, elektrischer oder optischer Signalgeber (59) zur Anzeige von Funktionsstörungen vorgesehen ist.

**19.** System nach einem der Ansprüche 12 bis 18, dadurch gekennzeichnet, dass wenigstens ein weiterer Sensor, beispielsweise ein Temperatur-, Feuchtigkeits-, oder Neigungssensor für die Ermittlung von störungsspezifischen Daten vorgesehen ist.

**20.** System nach einem der Ansprüche 12 bis 19, dadurch gekennzeichnet, dass eine zumindest die beiden Ermittlungseinheiten (2,3) und den Speicher (54) aufweisende, systemspezifische Datenschalteinheit (84d) an einem Fahrzeugbestandteil (82), insbesondere an der Windschutzscheibe, manipulationssicher befestigt ist.

**21.** System nach Anspruch 20, dadurch gekennzeichnet, dass der Datenschalteinheit (84) ein die Identifikation des Fahrzeugs (1) ermöglichendes, insbesondere elektronisch ablesbares, Identifikationsmerkmal (15;78) manipulationssicher zugeordnet ist.

**22.** System nach Anspruch 20 und 21, dadurch gekennzeichnet, dass der Datenschalteinheit (84) eine Manipulations-Kontrolleinrichtung zugeordnet ist, die wenigstens ein zwischen Datenschalteinheit (84) und Fahrzeugbestandteil (82) mittel- oder unmittelbar angeordnetes Triggerteil (83) und wenigstens eine zwischen Datenschalteinheit (84) und Fahrzeugbestandteil (82) mittel- oder unmittelbar angeordnete Solltrennfläche bzw. Solltrennstelle (86;86') aufweist.

**23.** System nach Anspruch 22, dadurch gekennzeichnet, dass das Triggerteil (83) aus plastisch oder elastisch verformbarem Material ausgebildet ist, oder gegebenenfalls eine Soll-Trennfläche definierende Bereiche geringerer Kohäsion aufweist.

**24.** System nach Anspruch 22 oder 23, dadurch gekennzeichnet, dass die Manipulations-Kontrolleinrichtung wenigstens einen Schalter, einen Sensor und/oder einen durch die Sollbruchstelle (86;86') geführte Leiter (30) enthält, über den gegebenenfalls dem Speicher (54) zeitbezogene Daten über Manipulationsversuche zugeführt werden un/oder über den der Signalgeber (59) betätigt wird.

**25.** System nach einem der Ansprüche 20 bis 24, dadurch gekennzeichnet, dass wenigstens eine für die Befestigung der Datenschalteinheit (84) an dem Fahrzeugbestandteil (82) vorgesehene Befestigungseinrichtung (96) nach erfolgter Montage - gegebenenfalls mittels einer als Verriegelungsplatte (91) ausgebildeten, mechanischen und/oder elektrischen Vorrichtung - verdeckt angeordnet ist und wobei für einen - befugten - Zugriff auf die Befestigungseinrichtung (96) eine - insbesondere elektronische - Zugriffscodeeinheit (90) vorgesehen ist, deren spezifisches Identifikationsmerkmal (94) dem Speicher (54) der Datenschalteinheit (84) über eine Schnittstelle (95) zuführbar und dort - gegebenenfalls zeitbezogen und klassiert - ablegbar ist.

**26.** Verwendung eines Verfahrens nach einem der Ansprüche 1 bis 11, bzw. eines Systems nach einem der Ansprüche 12 bis 25, zur Bestimmung von fahrstreckenabhängigen Gegenwerten, beispielsweise Steuerbeträgen, wobei die dieser Bestimmung zugrunde zu legenden Daten sowohl Strecken- als auch Zeitdaten umfassen.

**27.** Verfahren nach Anspruch 1 bis 3, dadurch gekennzeichnet, dass ein Signal, das allein die Tatsache des Bewegungszustands des Fahrzeugs signalisiert, mit dem Zustand des Impulseingangs verglichen wird.

**28.** System nach Anspruch 12 bis 25, dadurch gekennzeichnet, dass die Schnittstelle ein Kartenleser ist.

**Claims**

**1.** Method to determine, record and from case to case evaluate operational and/or driving data of a vehicle (1) with

- at least one first recording unit (2),
- a computing unit (24;51) for the data administration;
- a memory unit (54) to memorise the data especially in dependence of the time and
- if required a data interface unit (5) allocated to the memory unit (54) to access the data **where**, to determine whether the data furnished by the first recording unit (2) is correct, faulty or manipulated,
- simultaneously to the memorisation of the data furnished by the first recording unit (2) also data, or their electronic equivalents, furnished by at least one second recording unit (3) and placed on the same vehicle, which is independent of the first one - especially different -, is recorded,
- where either the data furnished by both recording units (2,3) is stored in the memory unit (54) and made available there, and that at a later point of time comparison values are generated - if required outside the vehicle (1) - and undergoes an electronic analysis, by which the comparison data are analysed regarding possible differences,
- or comparison data is generated form the data furnished by both recording units (2,3), is stored in a memory unit and made available there, and that at a later point of time the comparison data undergoes an electronic analysis - if required outside the vehicle (1) - , by which the comparison data are analysed regarding possible differences.
- and where the recorded data furnished by at least one recording unit (2,3) is made available at a later point of time to a computer system (6) placed outside of the vehicle.

**2.** Method as of claim 1 where

- the data furnished by the first recording unit (2) is compared intermittently or continuously by an electronic upgrading unit (23) with comparable data furnished by at least one other recording unit (3) placed in the same vehicle, working independently - especially differently - from the first recording unit (2);
- on which is determined whether the data furnished by the first recording unit (2) is manipulated or is imperfect or whether it corresponds to the real data,
- after which the data or its electronic equivalents are stored appropriately in the memory (54) together with the comparison data or its equivalents and are made available - if required outside the vehicle (1) -, this latter data provides information about the truth content of the operational and/or driving data as well as about possible defects or manipulations on the data of the first or second recording units (2,3) and if applying of the system itself.

**3.** Method as of one of the precedent claims where the data furnished by both recording units (2,3) or the calculated comparison data is provided for the triggering of another procedure.

**4.** Method as of one of the precedent claims where the data from the first (2) and/or second recording unit (3) is recalculated according to preset parameters or algorithms to get parameter values for follow-up calculations and then stored in the memory unit (54) and/or are made available at the data interface unit (5).

**5.** Method as of one of the precedent claims where each recording unit (2,3) receives its data from at least one of the following sensor units, which if required is integrated in the corresponding recording unit (2,3), each unit comprising at least one sensor and :
distance impulse, acceleration, inclination angle, GPS position, pressure, optical rotation or gyroscope, noise, compass, wireless, distance measuring, inductive sensor unit.

6. Method as of one of the precedent claims where in addition to the mentioned data also data about each geographic position gained by e.g. a GPS satellite navigation unit (26) or road dependent marks are recorded in the memory unit (54) and/or made available to the computer unit (24) as parameters for the follow-up calculations, where the determination of these parameters preferably is made by means of a comparison with position data defined in tables.

7. Method as of claim 5 or 6 with at least one acceleration sensor unit (19a) consisting of at least one acceleration sensor (38a, 38b) where the determined driving data is horizontal acceleration values where

   - the angle position Bo between vehicle and vertical is determined in a not accelerated state and where possibly a reset to the zero position of at least one of the acceleration sensors (38a) and/or its electronic is made at defined time intervals and
   - each of the acceleration values are calculated based on data detected by means of another sensor and/or based on a probability distribution curve set with the corresponding latest measured angle value Bo.

8. Method as of one of the precedent claims where the two recording units (2, 3) are modified or exchanged from time to time.

9. Method as of one of the precedent claims where the calculated comparison data - preferably calculated according to preset plausibility criteria - is stored in the memory unit (54) according to frequency classes and made available for a later access and/or for an evaluation preferably made according to preset plausibility criteria.

10. Method as of one of the precedent claims where the comparison data is used for the calculation of converting parameters - preferably made after defined time intervals - between at least two sensors which are allocated to at least one of the two recording units (2,3) whereby possibly a quasi-continuous calibrating of a - especially vehicle-dependent - sensor unit is made.

11. Method as of one of the precedent claims where at least one additional sensor unit of the same or of a different kind with at least one sensor (8) is provided to have access to disturbing values for the calculation purposes such as temperature extremata or unusual road inclinations - which in case such disturbing values occur interrupts the evaluation procedure and/or stores disturbing specific data - especially time-related one - in the memory unit (54).

12. System to determine, record and evaluate from case to case operational and/or driving data of a vehicle (1) with a data processing unit (84) which at least partly is fixed indirectly or directly to a part of the vehicle (82) with

   - at least one first data recording unit (2);
   - a computing unit (24; 51) for the data administration;
   - a memory (54) to store the data especially in dependence on the time; as well as
   - if required a data interface (5) allocated to the memory unit (54) for the access to data where
   - in the same vehicle (1) to a first recording unit (2) is allocated at least a second recording unit (3) which calculates data independent from and possibly in a different way than the first data recording unit (2), which data is comparable to the data received from the first data recording unit (2),
   - either both recording units are linked to the memory unit (54) over the computing unit (24;51) and an evaluation circuit (9b) is possibly placed outside the vehicle (1), which evaluation circuit can be allocated to the data interface (5) or is allocated to the computing unit (24;51).
   - or both recording units are linked to the memory unit (54) over an evaluation circuit (9a), which can be allocated to the data interface (5) or is allocated to the computing unit (24;51).

13. System as of claim 12 where at least one component of the data processing unit especially at least one of the recording units (2,3) and/or the computing unit (24;51) is placed or designed inaccessible.

14. System as of claim 12 or 13 where the recording units (2,3) can be modified or exchanged from time to time - possibly software controlled.

15. System as of one of the claims 12 through 14 where each recording unit (2,3) contains at least one of the following sensor units - which can be integrated in said recording units:
distance impulse, acceleration, inclination angle, GPS position determination, pressure, optical rotation or gyroscope, noise, compass, wireless, distance measuring, inductive sensor unit.

16. System as of claim 15 with at least one acceleration unit (19;71,72) comprising a sensor (38a,38b;112;113) where two part sensors (38a,38b;112;113) are provided, especially integrated in a chip with an electronic circuit, preferably placed on a right angle to each other or where the acceleration sensor unit (19;71,72) has two measuring directions, which lay in a right angle to each other.

17. System as of one of the claims 12 through 16 where one or more sensors (112,113) and/or at least one of the two recording units (2,3) is assembled to at least one manually or program controlled rotating axis (110).

18. System as of one of the claims 12 through 17 where an acoustic, electric or optic indicator (59) is provided to indicate function errors.

19. System as of one of the claims 12 through 18 where at least one additional sensor such as a temperature, humidity or inclination sensor is provided to determine specific malfunctioning data.

20. System as of one of the claims 12 through 19 where a system-specific data processing unit (84d) at least including the two recording units (2,3) and the memory unit (54) is fixed manipulation safe to a vehicle component (82) especially on the windshield.

21. System as of claim 20 where the data circuit unit (84) is allocated a identification feature (15;78) for the identification of the vehicle, which cannot be manipulated and is especially electronically readable.

22. System as of claim 20 and 21 where the data processing unit (84) comprise a manipulation monitoring device consisting of at least one trigger part (83) placed indirectly or directly between the data processing unit (84) and a vehicle component (82) and at least one weak section or location (86;86') placed indirectly or directly between the data processing unit (84) and a vehicle component (82).

23. System as of claim 22 where the trigger part (83) is made out of a plastically or elastically formable material and/ or comprise an areas with a weak section of lower cohesion.

24. System as of claim 22 or 23 where the manipulation monitoring unit contains at least one switch and/or sensor by which time-related data about manipulation attempts are transmitted possibly to the memory (54) or which operate the indicator (59).

25. System as claimed in one of the claims 20 through 24 where at least one fixing device (96) provided for the assembling of the data processing unit (84) to the vehicle component (82) after the assembling is hidden - possibly by means of a mechanic and/or electric device in form of a locking plate (91) - and where an especially electronic access code unit (90) is provided for a permitted access to the fixing device (96), the specific identification feature (94) of said access code unit can be communicated to the memory (54) of the data circuit unit (84) by means of an interface (95) and can be stored there possibly time-related and classified.

26. Use of a method as claimed in one of the claims 1 through 11 or of a device and/or as claimed in one of the claims 12 through 28 of a system to determine distance dependent equivalent values, e.g. driving tax fees where the data on which they are based consist of both, distance data as well as time data.

27. Method as claimed in one of the claims 1 through 3 where a signal, which alone indicate the fact of movement of a vehicle, is compared with the state of the impulse entry port.

28. System as claimed in one of the claims 12 through 26 where a card reading unit is built on.

**Revendications**

1. Procédé pour déterminer, enregistrer et de cas en cas évaluer des données administratives ou de conduites concernant l'utilisation d'un véhicule (1) avec;

   - au moins une première unité d'évaluation (2)
   - une unité de calculation (24;51) pour le gestion des données;
   - une unité mémoire (54) pour la mémorisation de données, en particulier par rapport à l'échelle du temps, et

- s'il convient, un interface de communication (5) subordonnée à l'unité mémoire (54) pour le transfert des données, caractérisé en ce que,

pour contrôler, si les données provenant d'une première unité d'évaluation sont correctes, imparfaites ou manipulées,

- simultanément à la mémorisation des données provenant de la première unité d'évaluation (2) des données sont aussi enregistrées, respectivement leur équivalent électronique, provenant de au moins une deuxième unité d'évaluation (3) indépendante de la première unité d'évaluation (2) - en particulier de conception différente - et placées sur le même véhicule (1),
- en ce que
  soit les données provenant des deux unités d'évaluation (2,3) sont mises en mémoire dans l'unité de mémoire (54) et à disposition, et que à un moment donné ultérieur des valeurs de comparaisons sont générées - s'il convient hors du véhicule (1) - et soumisent à une analyse électronique, pendant laquelle des données de comparaisons sont examinées pour la détection de différences éventuelles,
- ou des données de comparaisons sont générées sur la base des données provenant des deux unités d'évaluation (2,3), sont mise en mémoire et à disposition pour une utilisation ultérieure, et que à un moment donné ultérieur les données de comparaisons sont soumises à une analyse électronique - s'il convient hors du véhicule (1) - pendant laquelle des données de comparaisons sont examinées pour la détection de différences éventuelles,
- et en ce que les données enregistrées provenant d'au moins une unité d'évaluation (2,3) peuvent être à un moment donné ultérieur mise à disposition à un centre de traitement de données (6) placé en dehors du véhicule.

2. Procédé selon la revendication 1, caractérisé en ce que

- les données provenant de la première unité d'évaluation (2) sont comparées dans une unité électronique de gestion (23) de manière intermittente ou continue avec des données comparables provenant d'une deuxième unité d'évaluation (3), qui est indépendente - en particulier différente - de la première unité d'évaluation (2).
- et sur celà sera examiné, si les données provenant de la première unité d'évaluation (2) sont manipulées ou imparfaites, ou si lesdites données correspondent aux données réelles,
- et ensuite les données, respectivement leurs équivalents électroniques, avec les données de comparaisons, respectivement leurs équivalents, sont mémorisées de façon adéquate dans l'unité mémoire (54) et mises à disposition - s'il convient en dehors du véhicule (1)-, lesdites dernières données donnant des indications sur la véracité des données administratives - respectivement données de conduite, ainsi que dérangements éventuels ou manipulations des données provenant de la première ou de la deuxième unité d'évaluation (2 ou 3) et le cas échéant concernant le système même.

3. Procédé selon une des revendications précédentes, caractérisé en ce que les données provenant des deux unités d'évaluation (2,3), repectivement des données de comparaison, sont mises à disposition pour actionner une procédure supplémentaire.

4. Procédé selon une des revendications précédentes, caractérisé en ce que les données provenant de la première unité d'évaluation (2) et /ou de la deuxième unité d'évaluation (3) sont transformées selon des paramètres ou des algorithmes définis à l'avance en valeurs numériques pour des calculations ultérieures et mémorisée dans l'unité mémoire (54) et/ou mise à disposition de l'interface de communication (5).

5. Procédé selon une des revendications précécentes, caractérisé en ce que chaque unité d'évaluation (2,3) reçoit ces données de au moins une des unités de capteur suivantes, qui s'il convient est intégrée dans l'unité d'évaluation (2,3) correspondante, chaque unité comprenant au moins un capteur: unité de capteur d'impulsion de déplacement, de vitesse, d'accélération, de niveau, de position GPS, de pression, optique de rotation ou de type gyroscope, de bruits, de type boussole, par radio, de chemin parcouru, par capteur inductif.

6. Procédé selon une des revendications précédentes caractérisé en ce que en addition des données citées précédemment aussi des données de position géographique générées, par exemple par l'intermédiaire d'une unité de capteur de navigation GPS fonctionnant par satellite (26) ou par l'intermédiaire de marquages routiers -, sont placées dans l'unité mémoire (54) et/ou mises à disposition de l'unité de calculation (24) sous forme de paramètres utilisables pour la calculation ultérieure, lesdits paramètres étant évalués de préférence par comparaison de données de position placées dans des tabelles.

**7.** Procédure selon la revendication 5 ou 6 avec au moins une unité de capteur accélérométrique (19a) comprenant au moins un capteur d'accélération (38a,38b) caractérisé en ce que les données de conduite évaluées sont des valeurs d'accélération horizontales, où:

- l'angle Bo défini par la position du véhicule et la verticale est évalué dans une situation d'accélération nulle et une mise à zéro de au moins un capteur d'accélération respectivement de son électronique est faite à intervales de temps prédéfinis, et
- chaque valeur d'accélération est calculée sur la base de données provenant d'un capteur additionnel, respectivement sur la base d'une courbe de distribution statistique résultante des dernières valeurs d'angles Bo mesurées.

**8.** Procédé selon une des revendications précédentes, caractérisé en ce que les deux unités d'évaluation (2,3) sont modifiées ou échangées de temps à autre.

**9.** Procédé selon une des revendications précédentes caractérisé en ce que les données de comparaisons générées - de préférence selon des critères de probabilités définis à l'avance - sont placées selon des classes d'occurence dans l'unité de mémoire (54) et mises à disposition pour une utilisation et/ou une évaluation ultérieure - qui sera de préférence conduite sur la base de critères de probabilité définis à l'avance.

**10.** Procédé selon une des revendications précédentes caractérisé en ce que les données de comparaisons sont utilisées pour évaluer - de préférence à intervales de temps définis à l'avance - entre au moins deux capteurs des paramètres de conversion, lesquels sont subordonnés à au moins une de au moins deux unités d'évaluation (2,3), avec quoi, s'il convient, un étalonnage quasi-continu d'une unité capteur - en particulier dépendante du véhicule - est réalisé.

**11.** Procédé selon une des revendications précédentes caractérisé en ce que au moins une unité capteur supplémentaire d'un même type ou d'un type différent comprenant au moins un capteur (8) est prévu pour l'enregistrement de valeurs perturbatrices pour le calcul, comme des valeurs de température extrême ou une pente de route exceptionnelle, qui - quand de telles valeurs sont mesurées - interrompt la procédure d'évaluation et/ou place dans l'unité mémoire (54) des données spécifiques au dérangement - en particu-lier dépendantes du temps.

**12.** Système pour déterminer, enregistrer et de temps à autre évaluer des données administratives ou de conduite concernant l'utilisation d'un véhicule (1) avec un dispositif d'enregistrement (84) qui est au moins fixé partiellement directement ou indirectement sur une pièce d'un véhicule (82), qui comprend :

- au moins une première unité d'évaluation (2)
- une unité de calculation (24;51) pour la gestion des données
- une unité mémoire (54) pour la mise en mémoire de données, en particulier en relation avec le temps; ainsi que
- s'il convient un interface de communication (5), qui de préférence est subordonné à l'unité mémoire (54), pour la communication de données caractérisé en ce que
- dans le même véhicule à la première unité d'évaluation (2) est subordonné au moins une deuxième unité d'évaluation (3), qui évalue des donnés de manière indépendante et en particulier différente par rapport à la première unité d'évaluation (2), lesdites données étant comparables avec les données provenant de la première unité d'évaluation (2),
- soit les deux unités d'évaluation sont connectées avec l'unité mémoire (54) à travers l'unité de calcul (24;51) et un circuit d'évaluation (9b) est placé de préférence à l'extérieur du véhicule, le circuit d'évaluation pouvant être subordonné à l'interface de communication (5) ou être subordonné à l'unité de calculation (24;51),
- ou les deux unités d'évaluation sont connectées avec l'unité mémoire (54) à travers un circuit d'évaluation (9a) pouvant être subordonné à l'interface de communication (5) ou être subordonné à l'unité de calculation (24;51),

**13.** Système selon la revendication 12 caractérisé en ce que au moins une partie du dispositif d'enregistrement, en particulier au moins une des deux unités d'évaluation (2,3) ou l'unité de calculation (24;51) sont disposées et/ou conçues avec une protection d'accès.

**14.** Système selon les revendications 12 ou 13, caractérisé en ce que les unités d'évaluation (2,3) peuvent être de temps à autre - de préférence par logiciel - échangées ou modifiées.

15. Système selon une des revendications 12 à 14 caractérisé en ce que chaque unité d'évaluation (2,3) - en particulier y intégré - comprend au moins une des unités de capteur suivante:
unité de capteur de mouvement, d'orientation, compteur de tour de moteur, d'impulsion de déplacement,d'accélération, de niveau, de position GPS, de pression, optique de rotation ou de type gyroscope, de bruits, de type boussole, par radio, de chemin parcouru, par capteur inductif.

16. Système selon la revendication 15 avec au moins une unité de mesure d'accélération comprenant au moins un capteur (38a,38b;112;113) caractérisé en ce que deux capteurs individuels (38a,38b;112;113), en particulier intégrés avec un circuit électronique sur une même puce, sont disposés de préférence à angle droit l'un par rapport à l'autre ou que l'unité de captage d'accélération (19;71,72) comprend deux directions de mesures, qui forme un angle droit entre eux.

17. Système selon une des revendications 12 à 16 caractérisé en ce que un ou plusieurs capteurs (112,113) et/ou au moins une des deux unités d'évaluation (2,3) est montée au moins sur un axe (110) pouvant être orienté manuellement ou contrôlé par logiciel.

18. Système selon une des revendications 12 à 17, caractérisé en ce que un indicateur (59) acoustique, électrique ou optique est prévu pour l'indication de mauvaise fonction.

19. Système selon une des revendications 12 à 18, caractérisé en ce que au moins un capteur additionnel est prévu pour l'évaluation de données propre à un dérangement comme par exemple un capteur de température, humidité ou de niveau.

20. Système selon une des revendications 12 à 19 caractérisé en ce qu'un dispositif d'enregistrement (84d) spécifique au système comprenant au moins les deux unités d'évaluation (2,3) et une unité mémoire (54) est fixé de manière non-manipulable sur une pièce du véhicule, en particulier sur le parre-brise.

21. Système selon la revendication 20, caractérisé en ce que le dispositif d'enregistrement (84) comprend une marque d'indentification permettant d'identifier le véhicule (1), en particulier de manière électronique, protégé contre la manipulation.

22. Système selon les revendications 20 et 21, caractérisé en ce que l'unité d'enregistrement (84) comprend un dispositif de contrôle de manipulation, qui comprend au moins une pièce de détection (83) disposée directement ou indirectement entre l'unité d'enregistrement (84) et une pièce du véhicule (82) et au moins une zone de rupture, respectivement un point de rupture (86;86') disposé entre l'unité d'enregistrement (84) et une pièce du véhicule (82).

23. Système selon la revendication 22 caractérisé en ce que la pièce de détection (83) est faite de matière plastique ou élastique déformable et/ou comprend une zone définie comprenant une section de rupture d'une adhésion réduite.

24. Système selon les revendications 22 et 23, caractérisé en ce que le dispositif de contrôle de manipulation comprend au moins un interrupteur, un capteur ou un élément conducteur (30) qui passe par la zone de rupture (86;86'), par lequel sont remis des données dépendantes du temps relatant de tentative de manipulation, s'il convient, à l'unité mémoire (54) ou par lequel est contrôlé l'indicateur (59).

25. Système selon une des revendications 22 à 24, caractérisé en ce que au moins un point d'attache prévu pour la fixation de l'unité d'enregistrement (84) sur une partie du véhicule est disposé de manière cachée après le montage - par exemple au moyen d'un dispositif mécanique ou électrique comprenant un plateau de vérouillage - et en ce que pour un accès autorisé du dispositif de fixation (96) est prévu une unité comprenant un code d'accès (90) - de préférence électronique -, dont les données spécifiques d'identification (94) sont rendues accessibles au moyen d'un interface (95) à l'unité mémoire (54) du dispositif d'enregistrement (84) et peuvent y être mises en mémoire - s'il convient en fonction du temps et classées.

26. Utilisation d'un procédé selon les revendications 1 à 11, respectivement d'un système selon les revendications 12 à 25, pour l'évaluation de valeurs dépendantes du chemin parcouru, comme par exemple le montant d'un impôt, où les données pour cette évaluation comprennent aussi bien des données de chemin parcouru que de temps.

27. Procédé selon les revendications 1 à 3 caractérisé en ce que un signal, qui de lui-même signale le fait de mouvement d'un véhicule, est comparé avec l'état de l'entrée d'impulsion.

28. Système selon les revendications 12 à 26 caractérisé en ce que un lecteur de cartes y est adjoint.

59    10    52    84

54

ROM/RAM    LCD

58    RTC    53

51    µProcessor

2

3    ×    Bat    13

8

56    57

55    5

**Fig. 1**

17

84    16

1

1    14

**Fig. 2**

Fig. 3a

Fig. 3b

Fig. 3c

Fig.4a

Fig.4b

Fig.5a

Fig.5b

Fig.5c

Fig.6a

Fig.6b

Fig.6c

Fig.6d

Fig. 7

Fig. 8

**Data structure** 47

| C Value 1 | Sta 1,1 | Sta 2,1 | Sta .,1 | Sta x,1 |
| C Value 2 | Sta 1,2 | Sta 2,2 | Sta .,2 | Sta x,2 |
| C Value 3 | Sta 1,3 | Sta 2,3 | Sta .,3 | Sta x,3 |
| C Value 4 | Sta 1,4 | Sta 2,4 | Sta .,4 | Sta x,4 |
| C Value 5 | Sta 1,5 | Sta 2,5 | Sta .,5 | Sta x,5 |
| C Value . | Sta 1,. | Sta 2,. | Sta .,. | Sta x,. |
| C Value . | Sta 1,. | Sta 2,. | Sta .,. | Sta x,. |
| C Value . | Sta 1,. | Sta 2,. | Sta .,. | Sta x,. |
| C Value n | Sta 1,n | Sta 2,n | Sta .,n | Sta x,n |

n1 records

x results Fields

48   49   49b

Fig. 9a

Fig. 9b

Fig. 10

Fig.11a

Fig.11b

Fig.12a

Fig.12b

Fig.13a

Fig.13b

Fig.14a

Fig.14b

Fig.15a

Fig.15b

Fig.15c

Fig.16a

Fig.16b

Fig.16c

89　84j　82

Fig. 17

88b　31

84k

82　83

Fig. 18

10　96

5

Fig.19a

54　51　95　94a

15

91

3　5　90

Fig.19b

92

10　93

90

Fig.19c

Fig.19d

Fig. 20

Fig. 21

Fig.22a

Fig.22b